# EUROPEAN PATENT SPECIFICATION

(11) **EP 4 212 436 B1**
(45) Date of publication and mention of the grant of the patent: **11.03.2026**
(21) Application number: 20953134.2
(22) Date of filing: 11.12.2020
(51) Int. Cl.: B64F 1/305, G05B 19/04

(54) **BOARDING BRIDGE ANTI-COLLISION METHOD AND BOARDING BRIDGE ANTI-COLLISION SYSTEM**
FLUGGASTBRÜCKEN-ANTIKOLLISIONSVERFAHREN UND FLUGGASTBRÜCKEN-ANTIKOLLISIONSSYSTEM
PROCÉDÉ ET SYSTÈME ANTI-COLLISION DE PASSERELLE D'EMBARQUEMENT

(30) Priority: 11.09.2020 CN 202010954391
(43) Date of publication of application: 19.07.2023
(73) Proprietor: Shenzhen CIMC-TIANDA Airport Support Ltd., Shenzhen, Guangdong 518103 (CN)
(72) Inventor: CHEN, Yong, Shenzhen, Guangdong 518103 (CN); XIANG, Wei, Shenzhen, Guangdong 518103 (CN); DENG, Lan, Shenzhen, Guangdong 518103 (CN); LEI, Anliang, Shenzhen, Guangdong 518103 (CN); LIANG, Lexian, Shenzhen, Guangdong 518103 (CN)
(74) Representative: Potter Clarkson
(86) International application number: PCT/CN2020/135886
(87) International publication number: WO 2022/052349

(56) References cited:
- WO-A1-2019/229105
- WO-A1-2020/002405
- CN-A- 101 599 221
- CN-A- 101 599 221
- CN-A- 106 295 192
- CN-A- 112 046 781
- CN-U- 205 801 544
- CN-U- 205 801 544
- KR-A- 20130 123 997
- KR-A- 20130 123 997
- US-A1- 2003 145 405

## Description

### TECHNICAL FIELD

The disclosure relates to boarding bridge technology, and particularly to a boarding bridge collision avoidance method and a boarding bridge collision avoidance system.

### BACKGROUND

At present, in order to avoid collision between a boarding bridge and an aircraft or between one boarding bridge and another boarding bridge, the following solutions are commonly used.

The first solution is to install a proximity sensor at a high-risk location where a boarding bridge has a greater probability of collision. During the movement of the boarding bridge, when an object intrusion is sensed within the sensor's sensing range, the boarding bridge collision avoidance function will be triggered immediately. Both the boarding bridge and the aircraft have relatively complex outlines and large volumes, and the boarding bridge may move with multiple degrees of freedom at multiple joint points, the boarding bridge may collide with an adjacent boarding bridge or aircraft in various postures and from various directions. Therefore, probability of collision can be reduced with this solution, but complete collision avoidance cannot be achieved.

The second solution is to calculate a position relationship between the boarding bridge and another adjacent boarding bridge or the adjacent aircraft from both the boarding bridge status data and theoretical position data of the aircraft docked. When a distance between a certain point of the boarding bridge and certain points of the adjacent boarding bridge or the adjacent aircraft reaches a preset safe distance, the boarding bridge collision avoidance function will be triggered immediately. However, a disadvantage of using a software to avoid collision is highly dependent on the motion state data of the boarding bridge and the docking position data of the aircraft. When the data is wrongly collected, the calculation will be inconsistent with the actual situation, which may lead to a situation that a collision has occurred to the boarding bridge already but the collision avoidance function has not yet been triggered, or on the contrary, the collision avoidance function is triggered while the collision distance of the boarding bridge is still far away.
In the prior art, WO2019/229105A discloses a method for automated docking of a passenger boarding bridge ("PBB") to an aircraft, the aircraft having a fuselage and a door, to which door a bridgehead of the passenger boarding bridge is to be aligned, the method comprising the following steps: determining a target position in relation to the door, controlling a movement of the bridgehead based on the determined target position. CN101599221A discloses an anti-collision system between aircraft passenger bridges, comprising: a) defining for each set of passenger boarding bridge a fixed axis coordinate system which originates at the centre of the entrance rotunda, and a mobile axis coordinate system which originates at the centre of the cab joint area; b) defining for each set of passenger boarding bridge and at all times a series of references by its coordinates with respect to the first or second axis coordinate system, based on which, distances between references of each set of passenger boarding bridge and adjacent passenger boarding bridges can be calculated. KR20130123997A relates to a control device for a boarding bridge and a control method for a boarding bridge thereof, wherein the control device for a boarding bridge forms passages for enabling passengers to directly board a plane through multiple doors formed in the plane and controls the transfer of multiple boarding bridges in which a cabin is berthed in the doors by comprising: a rotunda installed in a passenger terminal building; a tunnel part in which one end is connected to the rotunda to be rotated and the length is varied; the cabin installed on the other end of the tunnel to be rotated. Accordingly, the control device and method prevent a collision between the boarding bridges without a blind area and remarkably reduces the berthing time and unberthing time of the boarding bridges to/from the plane.

It should be noted that the information disclosed in the above is intended only to enhance the understanding of the background of the present disclosure, and therefore may include information that does not constitute related technologies known to those of ordinary skill in the art.

### SUMMARY

An object of the disclosure is to provide a boarding bridge collision avoidance method, so as to realize an omnidirectional anti-collision protection of the boarding bridge and improve safety.

Another object of the present disclosure is to provide a boarding bridge collision avoidance system to realize the above collision avoidance method, with simple operations and an improved omnidirectional anti-collision protection of the boarding bridge.

Other characteristics and advantages of the disclosure will become apparent through the following detailed description, or partly learned through the practice of the disclosure.

According to an aspect of the disclosure, a boarding bridge collision avoidance method is provided, which comprises: acquiring a pre-configured protective region of a boarding bridge; scanning and acquiring a position of an obstacle; if the obstacle is located in the protective region, producing an alarm signal, and controlling the boarding bridge to perform a collision avoidance action; and if the obstacle is not located in the protective region, continually scanning.

The method further comprises: collecting a rotation angle range of a bridgehead of the boarding bridge, and equally dividing the rotation angle range be into n partitions, where N is a positive integer and N≥1; and when the bridgehead is rotated to a middle position of each of the partitions, drawing a protective region of each of the partitions according to an outline of the boarding bridge to obtain the pre-configured boarding bridge protective region.

According to an exemplary embodiment of the disclosure, an extending direction of the boarding bridge is taken as 0° reference, the rotation angle range of the bridgehead of the boarding bridge is determined to be [E, F], and the rotation angle range is equally divided into 16 partitions, where -30° ≤ E < F ≤ 90°.

According to an exemplary embodiment of the disclosure, the protective region comprises a first graded zone, an edge line of the first graded zone has a minimum distance from the outline of the boarding bridge on a side close to the obstacle.

According to an exemplary embodiment of the disclosure, the protective region comprises a plurality of graded zones, and edge lines of the plurality of graded zones have minimum distances increased in sequence from the outline of the boarding bridge on a side close to the obstacle.

According to an exemplary embodiment of the disclosure, the edge line of each of the protective region has a first end point and a second end point, wherein the first end point is determined according to a position of a driving unit of the boarding bridge, and the second end point is facing to a front end point of a front end of the bridgehead on a side close to the obstacle, an emitting point of a scanning line for scanning and acquiring the position of the obstacle is connected to the first end point to form a first side edge line, the emitting point of the scanning line is sequentially connected to the front end point and the second end point to form a second side edge line, and the first side edge line, the edge line and the second side edge line form the closed protective region.

According to an exemplary embodiment of the disclosure, the emitting point of the scanning line is taken as an origin, and a symmetric center line of a range scanned by the scanning line is taken as a Y-axis, a rectangular coordinate system is established in a scan plane of the scanning line, and coordinate values of each point of the protective region are acquired.

According to an exemplary embodiment of the disclosure, the rectangular coordinate system takes the bridgehead of the boarding bridge as a reference frame, and when the bridgehead is rotated to a middle position of one partition of the partitions, coordinate values of points of the protective region corresponding to the partitions are acquired.

According to an exemplary embodiment of the disclosure, the rectangular coordinate system takes the ground as a reference frame, and when the bridgehead is rotated to a middle position of one partition of the partitions, coordinate values of points of the protective region corresponding to the partition are acquired.

According to an exemplary embodiment of the disclosure, the range scanned by the scanning line has a shape of a fan, and a central angle of the fan is 250°-360°.

According to an exemplary embodiment of the disclosure, the method for acquiring a protective region of the boarding bridge further comprises: establishing a corresponding logical relationship between the rotation angle of the bridgehead and the protective region, and the corresponding logical relationship is: when the rotation angle is at (E+(m-1)*α, E+m*α], the protective region is Bm; where 1 ≤ m ≤ n, and m is a positive integer; and sending a switching signal for switching to the protective region Bm when the collected rotation angle β of the bridgehead s is within the range of (E+(m-1)*α, E+m*α].

According to an exemplary embodiment of the disclosure, the plurality of graded zones include a first graded zone and a second graded zone, wherein an edge line of the first graded zone has a first minimum distance from the outline of the boarding bridge on the side close to the obstacle; an edge line of the second graded zone has a second minimum distance from the outline of the boarding bridge on the side close to the obstacle; and the second minimum distance is greater than the first minimum distance; when the obstacle is located in the first graded zone, a first alarm signal is produced, and the boarding bridge is controlled to stop; and when the obstacle is located in second graded zone, a second alarm signal is produced, and the boarding bridge is controlled to slow down.

According to another aspect of the disclosure, a boarding bridge collision avoidance system is provided, which comprises a boarding bridge. The boarding bridge comprises a boarding bridge tunnel, a round platform, and a bridgehead which are connected in sequence, and the bridgehead is rotatable with respect to the round platform. The boarding bridge collision avoidance system further comprises: a distance sensing device arranged at a bottom of the round platform, configured to acquire a pre-configured protective region of the boarding bridge, scan and acquire a position of an obstacle, and judge if the obstacle is in the protective region, then produce and send an alarm signal, and judge if the obstacle is not in the protective regions, then continue scanning; and a boarding bridge control device, configured to receive the alarm signal, and judge whether the obstacle is located in the protective area. If so, it generates an alarm signal and controls the boarding bridge to perform anti-collision action; If not, the sensing device is controlled to continue scanning.

The boarding bridge collision avoidance system further comprises: a rotation angle measuring sensor arranged in the bridgehead and electrically connected to the boarding bridge control device, configured to collect a rotation angle range of the bridgehead and a rotation angle of the bridgehead, and send them to the boarding bridge control device.

The distance sensing device further comprises: a distance sensor, configured to scan and acquire the position of the obstacle; a protective region allocation module, configured to equally divide the rotation angle range into n partitions, where N is a positive integer and N≥1, and drawing the protective region of each partition according to an outline of the boarding bridge when the bridgehead is rotated to a middle position of each of the partitions, so as to obtain the pre-configured protective region of the boarding bridge; and a coordinate system establishment module, configured to take an emitting point of a scanning line emitted by the distance sensor as an origin, and take a symmetric center line of a range scanned by the scanning line as a Y-axis, so as to establish a rectangular coordinate system in a scan plane of the scanning line, and acquire coordinate values of each point of the protective region.

According to an exemplary embodiment of the disclosure, the boarding bridge control device stores a corresponding logical relationship between the rotation angle of the bridgehead and the protective region, and the corresponding logical relationship is: when the rotation angle is at (E+(m-1)*α, E+m*α], the protective region is Bm; where 1 ≤ m ≤ n, and m is a positive integer; and the distance sensing device further comprises: a controller, respectively electrically connected to the distance sensor and the boarding bridge control device, and when the rotation angle β of the bridgehead collected by the rotation angle measuring sensor is within the range of (E+(m-1)*α, E+m*α], the boarding bridge control device sends a switching signal of the protective region Bm corresponding to the rotation angle to the controller according to the corresponding logical relationship, the controller switches to the protective region Bm after receiving the switching signal, controlling the distance sensor to switch to the coordinate values of each point of the protection area Bm in the rectangular coordinate system corresponding to the rotation angle to obtain the protection area Bm of the boarding bridge, the distance sensor scans and obtains the position coordinates of the obstacle in the rectangular coordinate system corresponding to the rotation angle of the protection area Bm, and determines whether the position coordinates are located in the protection area, if yes, the alarm signal is generated.

According to an exemplary embodiment of the disclosure, the boarding bridge control device further comprises a collision avoidance control module for controlling the boarding bridge to perform a collision avoidance action.

According to an exemplary embodiment of the disclosure, the bridgehead comprises a rotating rod located below the round platform and connected to the round platform and the bridgehead; the distance sensing device is arranged on the rotating rod to rotate with the bridgehead; or the distance sensing device is arranged on the round platform.

According to an exemplary embodiment of the disclosure, the boarding bridge collision avoidance system comprises distance sensing devices which are respectively: a first distance sensing device including a first distance sensor, all first scanning lines emitted by the first distance sensor form a first scan plane, and the first scan plane is a horizontal plane; and a second distance sensing device located below the first distance sensing device, the second distance sensing device comprises a second distance sensor located below the first distance sensor, all second scanning lines emitted by the second distance sensor form a second scan plane, and the second scan plane is inclined downward with respect to the first scan plane.

According to an exemplary embodiment of the disclosure, the distance sensing devices further comprises: a third distance sensing device located above the first distance sensing device, the third distance sensing device comprises a third distance sensor, a third scanning line emitted by the third distance sensor forms a third scan plane, and the third scan plane is inclined upward with respect to the first scan plane.

According to an exemplary embodiment of the disclosure, the boarding bridge collision avoidance system further comprises: at least one protective sensing device including a protective sensor arranged in the boarding bridge, all scanning lines emitted by the protective sensor are oriented toward the obstacle, and a scan region of the scanning lines is a three-dimensional cone.

It can be seen from the above technical solutions, the advantages and positive effects of the boarding bridge collision avoidance method of the disclosure are:

By acquiring a pre-configured boarding bridge protective region, all surrounding regions of the boarding bridge with a higher collision probability can be included in the protective region in advance, and then by determining whether the obstacle falls into the protective region, the boarding bridge is controlled to perform a collision avoidance action, so as to control the boarding bridge to move to avoid collision when the obstacle enters into the protective region, thereby achieving an all-round collision avoidance protection for the boarding bridge, while improving accuracy of collision avoidance and preventing occurrence of a dead angle of collision avoidance.

It should be understood, the above general description and the following detailed description are only exemplary and explanatory, and cannot limit the disclosure.

### BRIEF DESCRIPTION OF THE DRAWINGS

The drawings herein are incorporated into the specification and constitute a part of the specification, show embodiments conforming to the disclosure, and are used together with the specification to explain the principle of the disclosure. Obviously, the drawings in the following description only show some embodiments of the present disclosure, and for those ordinary skilled in the art, other drawings can be obtained based on these drawings without creative work.
Fig. 1 exemplarily shows a flowchart of a boarding bridge collision avoidance method in an embodiment of the disclosure;
Fig. 2 exemplarily shows a schematic side view of a boarding bridge in an embodiment of the disclosure;
Fig. 3 exemplarily shows a schematic partial perspective view of a boarding bridge in an embodiment of the disclosure;
Fig. 4 exemplarily shows a schematic view about determining a protective region in a boarding bridge collision avoidance method in an embodiment of the disclosure;
Fig. 5 exemplarily shows a schematic view about determining a protective region in a boarding bridge collision avoidance method in another embodiment of the disclosure;
Fig. 6 exemplarily shows a schematic view of a rectangular coordinate system for protective regions in an embodiment of the disclosure, wherein the rectangular coordinate system is based on a bridgehead of a boarding bridge;
Fig. 7 exemplarily shows a schematic view of a rectangular coordinate system based on a bridgehead of a boarding bridge for a protective region B01 in an embodiment of the disclosure;
Fig. 8 exemplarily shows a schematic view of a rectangular coordinate system based on a bridgehead of a boarding bridge for a protective region B08 in an embodiment of the disclosure;
Fig. 9 exemplarily shows a schematic view of a rectangular coordinate system based on a bridgehead of a boarding bridge for a protective region B16 in an embodiment of the disclosure;
Fig. 10 exemplarily shows a schematic view about determining a protective region in a boarding bridge collision avoidance method in a further embodiment of the disclosure;
Fig. 11 exemplarily shows a schematic partial perspective view of another boarding bridge in an embodiment of the disclosure;
Fig. 12 exemplarily shows a schematic view of a rectangular coordinate system for a protective region in an embodiment of the disclosure, wherein the rectangular coordinate system is based on the ground;
Fig. 13 exemplarily shows a schematic view of a docking process between the boarding bridge and the aircraft door in an embodiment of the present disclosure;
Fig. 14 exemplarily shows a functional block diagram of a boarding bridge collision avoidance system in an embodiment of the disclosure;
Fig. 15 exemplarily shows a schematic structural view of a boarding bridge collision avoidance system in an embodiment of the disclosure;
Fig. 16 exemplarily shows a functional block diagram of another boarding bridge collision avoidance system in an embodiment of the disclosure the disclosure;
Fig. 17 exemplarily shows a schematic structural view of another boarding bridge collision avoidance system in an embodiment of the disclosure the disclosure;
Fig. 18 is an enlarged view of part T in Fig. 17;
Fig. 19 exemplarily shows a schematic view about collision avoidance between boarding bridges in an embodiment of the disclosure.

### DETAILED DESCRIPTION

Example embodiments will now be described more fully with referring to the accompanying drawings. However, the example embodiments can be implemented in various forms, and should not be construed as being limited to the examples set forth herein. On the contrary, these embodiments are provided to make the disclosure more comprehensive and complete, and intended to fully convey the concept of the example embodiments to those skilled in the art. The described features, structures or characteristics can be combined in one or more embodiments in any suitable way, when falling within the scope of the appended claims.

In addition, the drawings are only schematic illustrations of the disclosure, and are not necessarily drawn to scale. Furthermore, the same reference numerals in the figures denote the same or similar parts, and thus their repeated description will be omitted. Some of the block diagrams shown in the drawings are functional entities and do not necessarily correspond to physically or logically independent entities. These functional entities are implemented in the form of software, or implemented in one or more hardware modules or integrated circuits, or implemented in different networks and/or processor devices and/or microcontroller device.

Hereinafter, the boarding bridge collision avoidance method provided by the exemplary embodiments of the disclosure will be described in detail with referring to the accompanying drawings and embodiments.

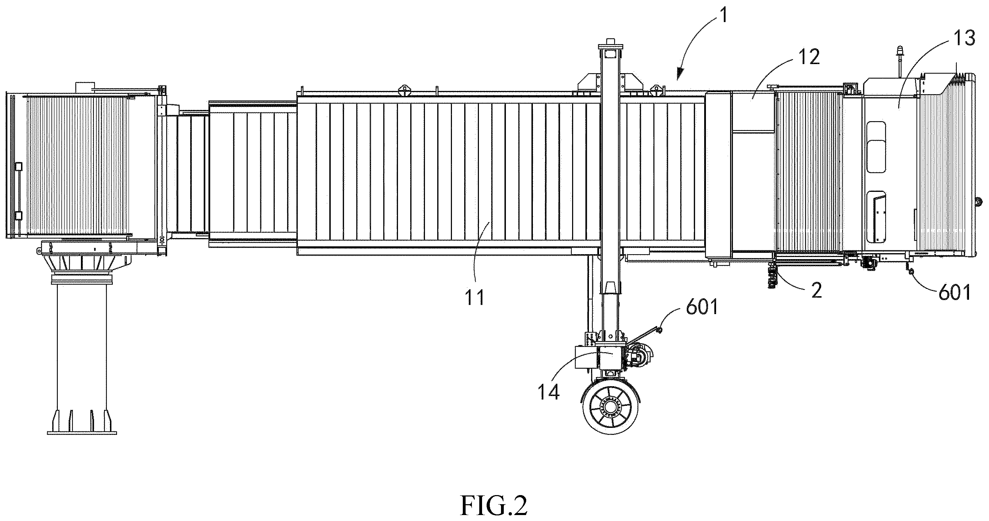

Before describing the method, in order to facilitate understanding, a structure of a boarding bridge 1 will be described at first. Please refer to Fig. 2, the boarding bridge 1 comprises a boarding bridge tunnel 11, a round platform 12, and a bridgehead 13 which are connected in sequence. The boarding bridge tunnel 11 can be extended and retracted, and a driving unit 14 is provided under the boarding bridge tunnel 11, that is, the boarding bridge 1 is pushed to move by this driving unit 14. Rotating rods 131 are provided under the bridgehead 13. Each of the rotating rods 131 has one end connected to a bottom of the round platform 12, and the other end connected to the bridgehead 13, so that the bridgehead 13 may rotate around the round platform 12 to realize a flexible docking to the aircraft door.

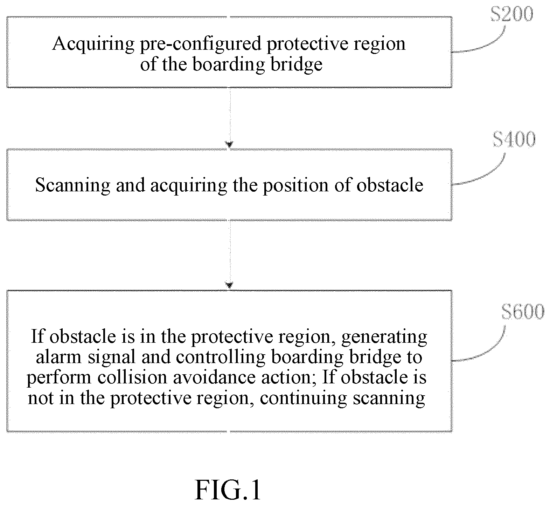

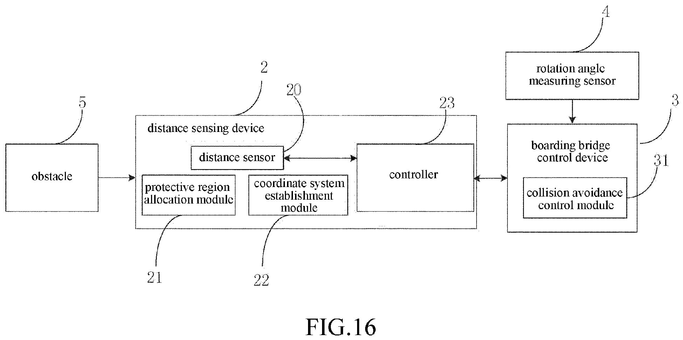

Fig. 1 exemplarily shows a flowchart of a boarding bridge collision avoidance method in an embodiment of the disclosure. The method provided by the embodiment of the disclosure can be used to prevent a collision between the boarding bridge 1 and the aircraft, and between the boarding bridges P1 and P2 (as shown in Fig. 16).

Referring to Fig. 1, the boarding bridge collision avoidance method comprises:

In step S200, acquiring pre-configured protective region of the boarding bridge.

The protective region of the boarding bridge is a region outside the boarding bridge which has a high collision probability. If an obstacle 5 enters the protective region, the obstacle is likely to collide with the boarding bridge.

In step S400, scanning and acquiring a position of the obstacle.

In this step, a scanner can be used to scan the position of the obstacle, so as to provide a basis for determinations in the following steps.

In step S600, if the obstacle is located in the protective region, an alarm signal is generated and the boarding bridge is controlled to perform a collision avoidance action; and if the obstacle is not located in the protective region, the scanning is continued.

In the above method, by acquiring the protective region of the boarding bridge, any area which has a higher collision probability surrounding the boarding bridge is included in the protective region in advance, and then the boarding bridge is controlled to perform the collision avoidance action by determining whether the obstacle falls into the protective region, so as to realize that when the obstacle enters the protective region, the boarding bridge can be controlled to avoid collisions. Therefore, an all-round collision protection of the boarding bridge is realized, and meanwhile an accuracy of collision avoidance is improved and a dead angle of collision avoidance can be avoided.

In step S200, acquiring the pre-configured protective region of the boarding bridge.

Collecting a rotation angle range of the bridgehead of the boarding bridge, and dividing the rotation angle range into N partitions, where N is a positive integer and N≥1. When the bridgehead is rotated to a middle position of each partition, the protective region of each of the partitions is drawn according to an outline of the boarding bridge, so as to obtain the pre-configured protective regions of the boarding bridge.

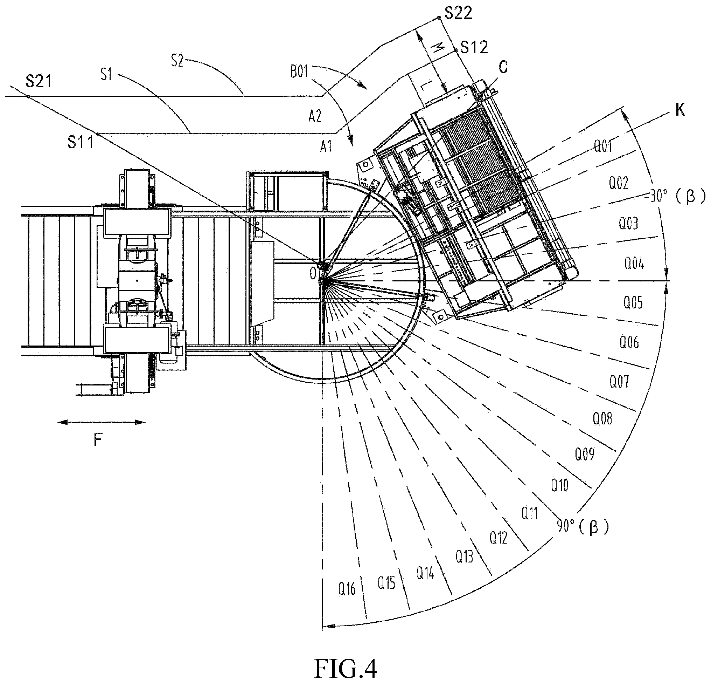

The rotation angle range of the bridgehead is a range of the rotation angle of the bridgehead on the round platform. Specifically, this rotation angle range can be understood as a rotation angle range of a central axis K of the bridgehead. As shown in Fig. 4, the central axis K is an axis perpendicular to the plane where the opening of the bridgehead is located, and passes through the center of the plane. Continuing to refer to Fig. 4, an extending direction F of the boarding bridge can be taken as 0° reference. At this time, it is determined that the rotation angle range of the bridgehead 13 of the boarding bridge 1 is [E, F], where -90° < E < F < 180°. For example, the rotation angle range can be -70° < E < F < 160°, -60° < E < F < 120°, -45° < E < F < 100°, and preferably, -30° ≤ E < F ≤ 90°°. For example, the rotation angle range may also be -20° ≤ E < F ≤ 80°, 0° ≤ E < F ≤75°, and 5° ≤ E < F ≤ 60°. The rotation angle range is equally divided into N partitions, and an included angle of each of the partitions is α = (F-E)/N. The rotation angle β of the bridgehead 13 is an included angle between the center plane of the boarding bridge tunnel 11 and the center plane of the bridgehead 13, and both the center planes are perpendicular to the ground.

In an embodiment, n = 16, E = -30°, and F = 90°. At this time, the rotation angle range of the bridgehead 13 is [-30°, 90°]. Such rotation angle range is equally divided into 16 partitions Q01-Q16, and an included angle α of each partition is 7.5°. Then, according to the outline of the bridgehead 13 rotating to the middle position of each of the partitions, the protective region of each of the partitions is respectively drawn. The corresponding logical relationship between the rotation angle β of the bridgehead 13 and the protective regions may refer to the following table:

**Table 1**

| | | | | | | |
|---|---|---|---|---|---|---|
| Bridgehead rotation Angle β | (E, E + α] | (E + α, E+2α] | ... | (E+(m-1)*α, E+m*α] | ... | (E+(n-1)*α, E+n*α] |
| Protective Region | B01 | B02 | ... | Bm | ... | Bn |

where 2< m< n, and m is a positive integer.

In an embodiment, each protective region may include at least one graded zone. For example, each protective region may include only one first graded zone A1. An edge line S1 of the first graded zone A1 has a first minimum distance L from the outline of the boarding bridge 1, 0.6m ≤ L ≤ 0.8m, and preferably L is 0.6m. Of course, L may also be 0.65m, 0.70m or 0.75m, there is no special limitation here.

In another embodiment, each protective region may also include a plurality of graded zones, and the minimum distance between the edge line of each of the plurality of graded zones and the outline of the boarding bridge 1 increases in sequence.

The minimum distance in the foregoing embodiment can be set by those skilled in the art according to actual conditions, e.g., according to the model of the aircraft and the model of the boarding bridge, mainly considering the regions prone to collision.

As shown in Fig. 4, according to the corresponding logical relationship in the above table, the partition Q01 is corresponding to the protective region B01. The protective region B01 may have two graded zones, i.e., a first graded zone A1 and a second graded zone A2. The first graded zone A1 may also be called a protection zone, and the second graded zone A2 may also be called a warning zone. As shown in Fig. 4, the edge line S1 of the first graded zone A1 has a first minimum distance L from an outline of one side of the boarding bridge close to the obstacle 5, and the edge line S2 of the second graded zone A2 has a second minimum distance M from the outline of the one side of the boarding bridge close to the obstacle 5, where the first minimum distance L is smaller than the second minimum distance M. In other words, compared with the edge line S2 of the second graded zone A2, the edge line S1 of the first graded zone A1 is closer to the outline of the one side of the boarding bridge 1 close to the obstacle, that is, in the first graded zone A1, there is higher probability for occurring a collision. Moreover, for the second minimum distance M, 1.2m ≤ M ≤ 1.6m, and preferably, M = 1.2m. Of course, M can also be 1.3m, 1.4m, 1.5m, and there is no special limitation here. In this embodiment, the grade of the second graded zone A2 is lower than the grade of the first graded zone A1, and the probability of occurring a collision in the second graded zone A2 is lower than that in the first graded zone A1. For example, if the obstacle 5 is in the first graded zone A1, which means the obstacle 5 is relatively closer to the boarding bridge 1, then a first alarm signal is produced, and the boarding bridge 1 is controlled to stop. If the obstacle 5 is in the second graded zone A2, which means the obstacle 5 is relatively far away from the boarding bridge 1, then a second alarm signal is produced, and the boarding bridge 1 is controlled to slow down to avoid collision with the obstacle 5.

Continuing to referring to Fig. 4, the edge line of each of the protective regions has two end points. Since the region with a higher collision probability is generally located on the side of the boarding bridge 1 close to the wing or the engine of the aircraft, and is generally located on the driving unit 14 on the side and the front end of the side of the bridgehead 13, in this embodiment, among the two end points of the edge line, a first end point is determined according to the position of the driving unit 14 of the boarding bridge 1. For example, the first end point is facing to the driving unit 14 or facing to a position on the boarding bridge tunnel 11 at a certain distance from the driving unit 14, and the second end point is facing to the front end point C of the front end of the bridgehead 13 on the side close to the obstacle.

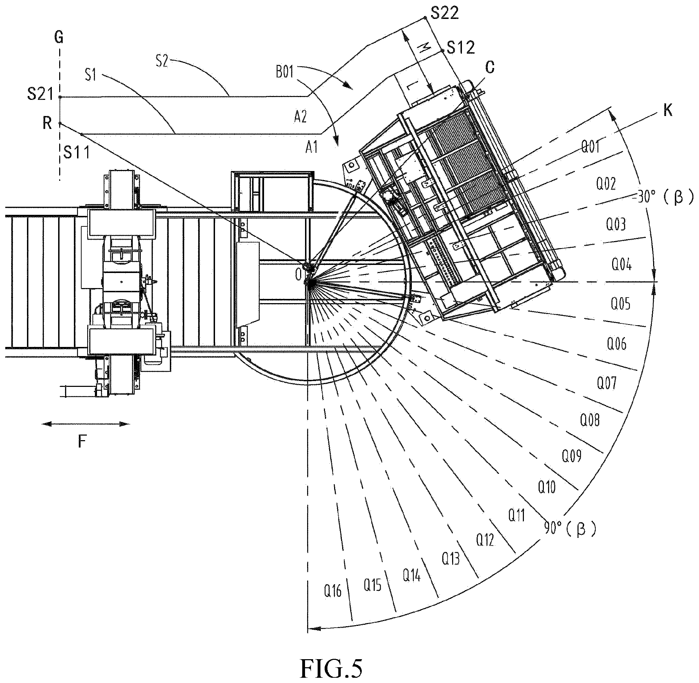

Furthermore, a distance sensor 20 emits a scanning line. An emitting point of the scanning line is connected to the first end point to form a first side edge line. Furthermore, the emitting point of the scanning line is sequentially connected to the front end point C and the second end point to form a second side edge line. The first side edge line, the edge line, and the second side edge line form a closed protective region. As a result, a protective region is established. Among them, the first side edge line, the edge lines, and the second side edge line are not limited to straight lines. As shown in Figs. 4 to 5, the edge line is broken line which changes according to the outline of the boarding bridge (the boarding bridge tunnel - the round platform - the bridgehead), and as shown in Fig. 5, the first side edge line and the second side edge line is broken lines. Furthermore, as shown in Fig. 4, the first side edge line may also be a straight line.

As shown in Fig. 4, when the bridgehead 13 is rotated to a middle position of the partitions Q01, that is, when the bridgehead 13 is rotated to a position where the rotation angle β is E+α/2, the edge line S1 of the first graded zone A1 of the protective region B01 has a first end point S11 and a second end point S12, the second end point S12 is facing to a front end point C of the front end of the bridgehead on the side close to the obstacle. The connecting line of O-S11 is the first side edge line, and the connecting line of O-C-S12 is the second side edge line. If the protective region B01 has two graded zones, the edge line S2 of the second graded zone A2 has a third end point S21 and a fourth end point S22, and then the connecting line of O-S21 is the third side edge line. It can be seen from Fig. 4, the connecting line of O-S21 is composed of the connecting line of O-S11 and the extension of the line where the connecting line of O-S11 is located. The connecting line of O-C-S22 is a fourth side edge line, and the region surrounded by S11-S21, S21-S22, S22-S12, and S12-S11 is the second graded zone A2.

Furthermore, as shown in Fig. 5, a boundary line G is arranged on a side of the protective regions away from the bridgehead. The boundary line G is perpendicular to an extending direction F of the boarding bridge tunnel 11, and the third end point S21 is located at the boundary line G. The boundary line G comprises a boundary point R at a position extending a distance from the third end point S21 in a direction to close to the first edge line S1. As shown in Fig. 5, the boundary point R is understood as an intersection of an extended line of O-S11 and the boundary line G. And the second graded zone A2 is surrounded by S11-R-S21, S21-S22, S22-S12, and S12-S11.

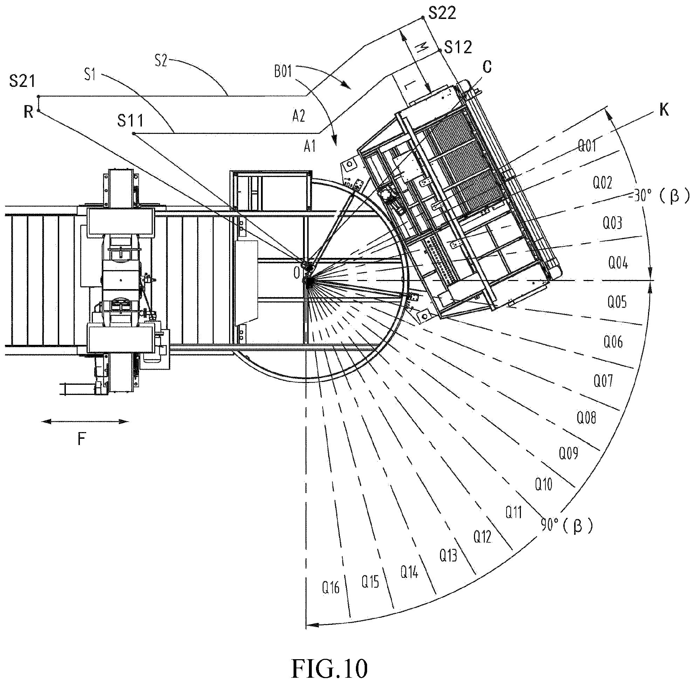

In another embodiment, as shown in Fig. 10, the second graded zone A2 is surrounded by O-R-S21, S21-S22, S22-S12, and S12-S11-O. The distance that the boundary line G extends from the third end point S21 in the direction to close to the first edge line S1 is the second minimum distance M minus the first minimum distance L, i.e., M-L. Of course, it may also be other values. Furthermore, the selected position of the boundary line G may also be other positions, as long as the connecting line of O-R and the driving unit do not interfere with each other. Those skilled in the art may decide the selection according to actual situation, and there is no special limitation here.

It should be noted that in the disclosure, "inside" and "outside" are technical terms indicating relative positional relationships which is based on the central axis of the boarding bridge tunnel 11 (the central axis of the boarding bridge tunnel 11 is used as a reference), directions away from the central axis to both sides of the central axis are the outward directions. Therefore, the aforementioned edge line S2 is located outside of the end line S1.

Continuing, a rectangular coordinate system is established. The emitting point of the scanning line is taken as the origin, the symmetric center line of the range scanned by the scan line is taken as Y axis, and a rectangular coordinate system is established in a scan plane of the scanning line, so as to acquire a coordinate value of each point of the protective region.

The scanning line is emitted through the distance sensor, and its scanning surface is generally fan-shaped. Therefore, the Y-axis is a symmetrical centerline of the fan-shaped scan plane, and a straight line perpendicular to the Y-axis and passing through the origin O (the emitting point of the scanning line) in the scan plane is taken as the X-axis. Of course, a straight line corresponding to the radius of other center angles of the fan-shaped scan plane may also be used as the Y-axis, which is not limited here. The purpose of establishing the rectangular coordinate system is to acquire the coordinates of each point of the protective regions and the coordinates of the obstacle 5, and to allocate the coordinates of the protective region corresponding to each partition to the distance sensing device, that is, to allocate the protective region in the distance sensing device in advance.

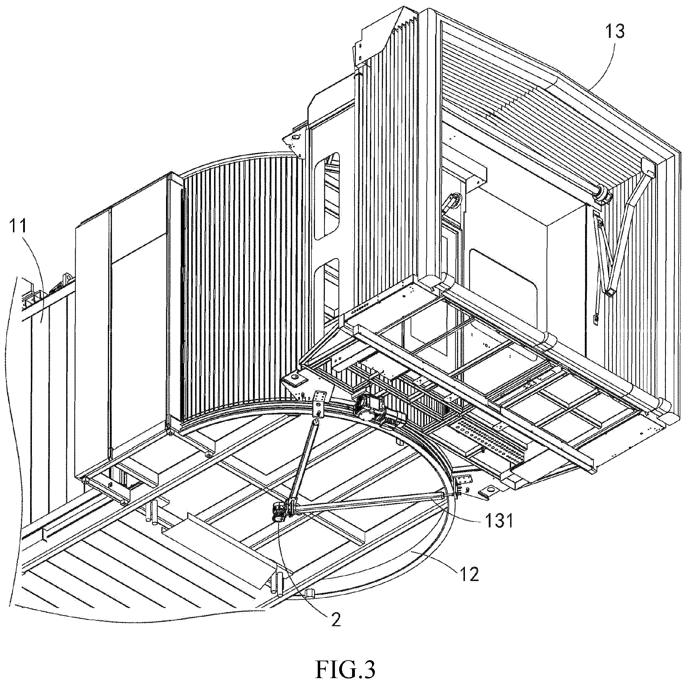

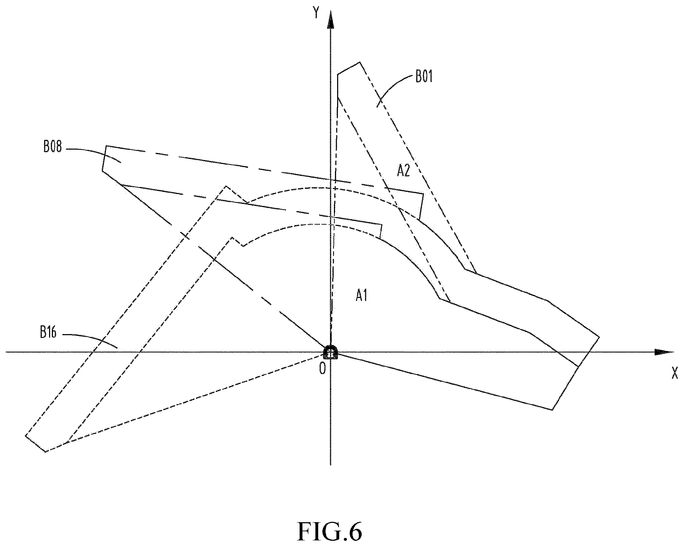

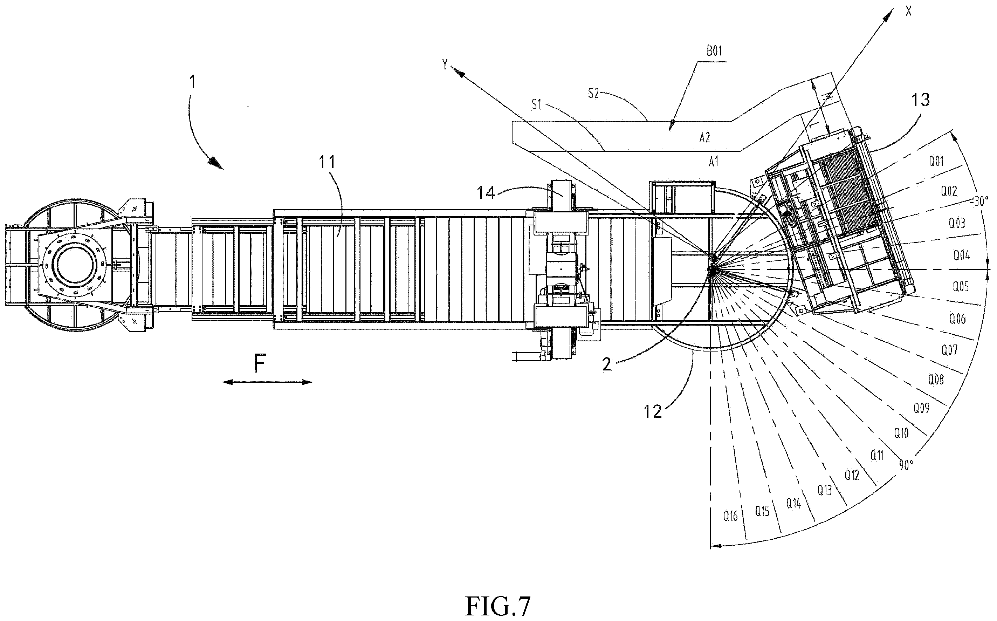

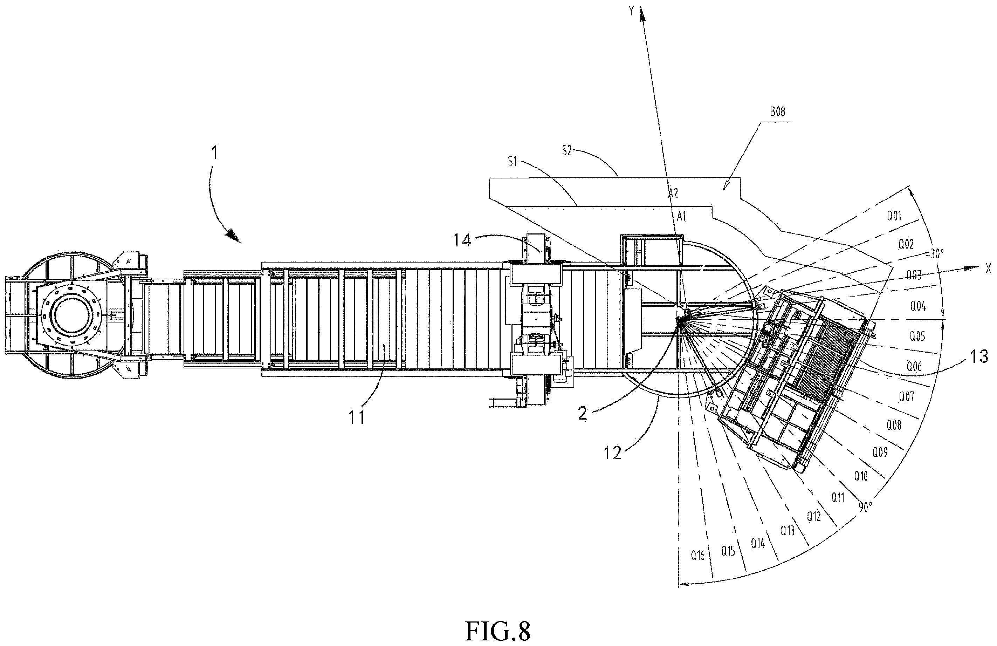

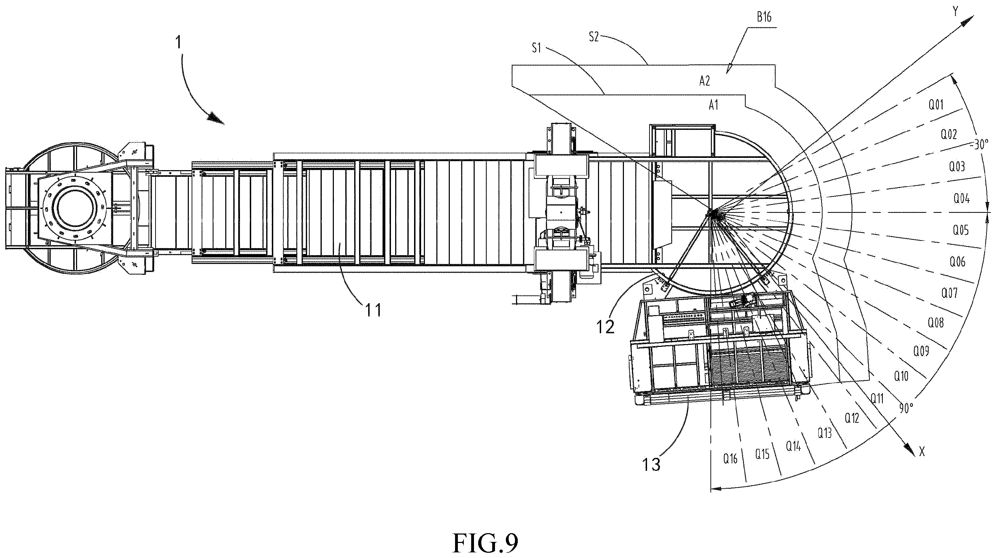

Specifically, in an embodiment, please refer to Figs. 3 to 10, which respectively show schematic views of the specific partial structure of the boarding bridge 1 when the distance sensing device 2 is arranged on the rotating rods 131 of the bridgehead 13, and the rectangular coordinate system of the protective region thus determined. In this case, distance sensing device 2 may rotate with the rotation of the bridgehead 13, and the rectangular coordinate system is established in the distance sensing device 2, thus the reference frame for the rectangular coordinate system is the bridgehead 13 of the boarding bridge 1. As shown in Figs. 7 to 9, which respectively show the rectangular coordinate system when the bridgehead 13 is rotated to partitions Q01, Q08, and Q16, and the corresponding protective regions B01, B08, and B16. The protective regions are shown in the same figure, as shown in Fig. 6. It should be noted, the solid lines in the fig.6 represent the overlapping parts of the protective regions.

When the bridgehead 13 is rotated to different partitions Q01-Q16, the coordinate values of the protective regions in the rectangular coordinate system corresponding to the partitions are acquired, thereby achieving allocation of the protective regions B01-B16 with different coordinate systems. When the bridgehead 13 is rotated to a certain partition, the protective region corresponding to the partition is obtained.

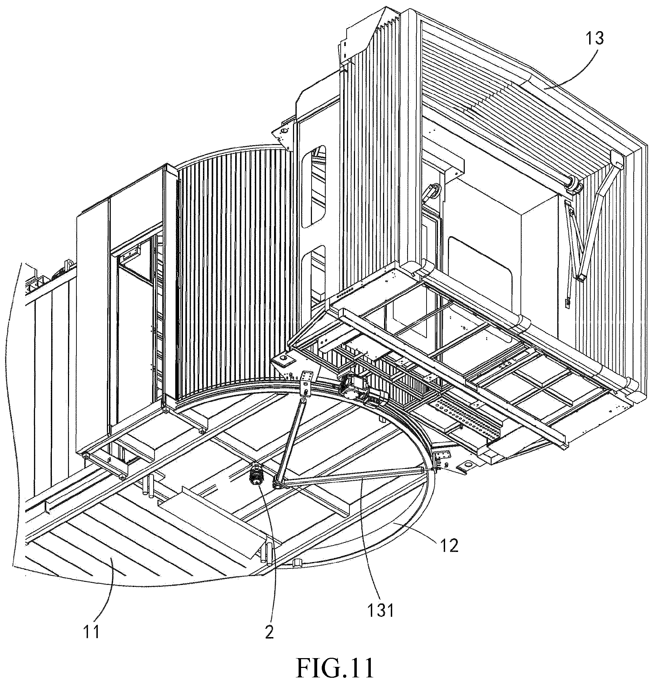

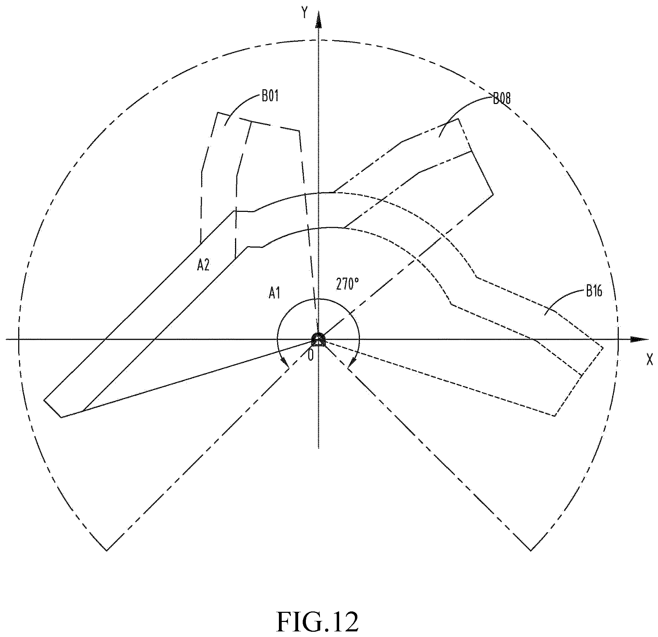

In another embodiment, please refer to Figs. 11 to 12, which respectively show a schematic view of a partial structure of the boarding bridge 1 when the distance sensing device 2 is provided on the round platform, and the accordingly determined rectangular coordinate system of the protective regions. In this case, the distance sensing device 2 would not rotate with the rotation of the bridgehead 13. Therefore, the rectangular coordinate system takes the ground as a reference. Please refer to Fig. 12, which shows the rectangular coordinate system and the corresponding protective regions B01, B08 and B16 when the bridgehead 13 is rotated to the partitions Q01, Q08 and Q16. The protective regions are shown in the same figure, and the solid lines in the figure represent the overlapping regions.

When the bridgehead 13 rotates to different partitions Q01-Q16, the coordinate values of the protective regions corresponding to the partitions in the rectangular coordinate system are acquired. When the bridgehead 13 rotates to a certain partition, the protective region corresponding to the partition is obtained.

The specific obtaining process is: when the collected rotation angle β of the bridgehead is within a range of (E+(m-1)*α, E+m*α), a corresponding logical relationship between the rotation angle β of the bridgehead and the protective regions is established according to Table 1, and a switching signal for a protective region Bm is sent to the distance sensing device 2 for switching to the protective region Bm, where m is a positive integer between [1, n]. Such that the protective region changes with the change of the rotation angle β when the bridgehead 13 rotates.

Adopting the same method, when the bridgehead 13 is rotated to the middle position of the other partition, respectively, that is, the bridgehead 13 is rotated to a position where the rotation angle β is E+((2m-1)α)/2, where m ≤ n (the allocating process of the protective regions B01, B08, and B16 has been described in the above embodiments, where m is 02, 03-07, and 09-16), and then the allocations of the protective regions B02 to Bn of the distance sensing device 2 are respectively completed.

In step S400, scanning and acquiring the position of the obstacle, which specifically comprises:

According to the allocation of the protective regions in the above steps, when the bridgehead 13 rotates to a different partition, the rectangular coordinate system corresponding to the partition is obtained, and the coordinate values of the obstacle 5 in the rectangular coordinate system are acquired through the distance sensing device 2.

In step S600, if the obstacle falls into the protective region, an alarm signal is produced, and the boarding bridge is controlled to perform a collision avoidance action; and if the obstacle does not fall into the protective region, continue scanning, which specifically comprises:

In the rectangular coordinate system corresponding to each partition, determine whether the coordinates of the obstacle enter a protective region. If the coordinates of the obstacle enter a first graded zone A1 of the protective region, which means that the risk of collision is high, then an alarm signal is produced and the boarding bridge 1 is controlled to stop. If the coordinates of the obstacle fall into a second graded zone A2 of the protective region, which means that the risk of collision is lower than that of the first graded zone A1, but a collision may also occur, alarm signal is produced, and the boarding bridge 1 is controlled to slow down. Therefore, through the above method, an all-round collision avoidance protection for the boarding bridge 1 is achieved, and there is no need to collect position data of obstacles (aircraft or adjacent boarding bridges 1), and furthermore, a multi-graded safety is achieved.

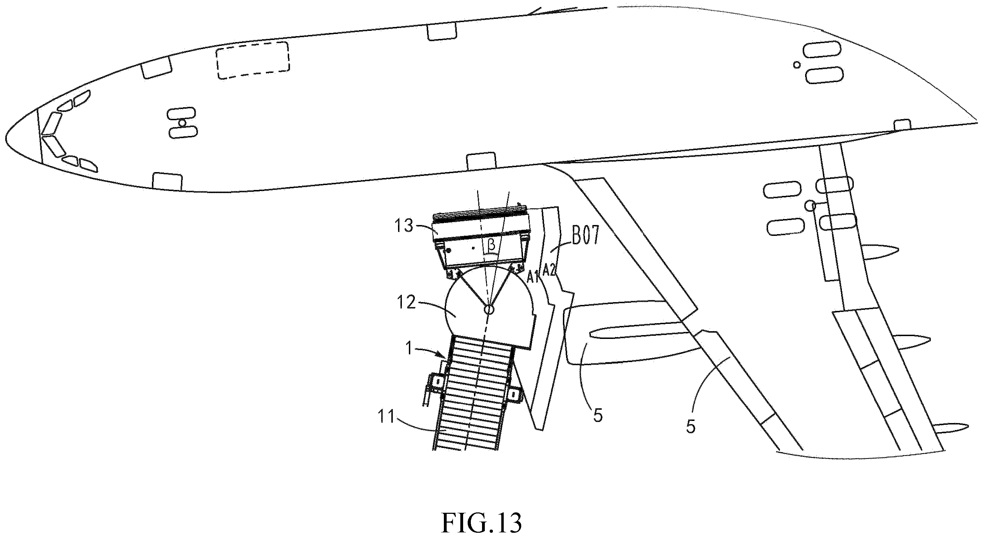

Please refer to Fig. 13, which shows a schematic view of a docking process between the boarding bridge 1 and the aircraft door by using the method in the above embodiment. Due to the adoption of the multi-graded protection and wide-range protection, the boarding bridge 1 is effectively prevented from colliding with the aircraft's wing or engine.

In summary, according to the boarding bridge collision avoidance method of the disclosure, by acquiring the pre-configured protective regions of the boarding bridge 1, all the areas with a higher probability of collision surrounding the boarding bridge 1 is included in the protective regions in advance, and then by determining whether the obstacle 5 falls into the protective regions, the boarding bridge 1 is controlled to perform a collision avoidance action, so that once upon the obstacle 5 falls into any of the protective regions, the boarding bridge 1 can be controlled to move to avoid collisions, thereby achieving all-round collision avoidance protection for the boarding bridge 1, and improving accuracy of collision avoidance at the same time to prevent a dead angle of collision avoidance from occurring.

According to another aspect of the disclosure, a boarding bridge collision avoidance system is provided to implement the collision avoidance method in the above-mentioned embodiment.

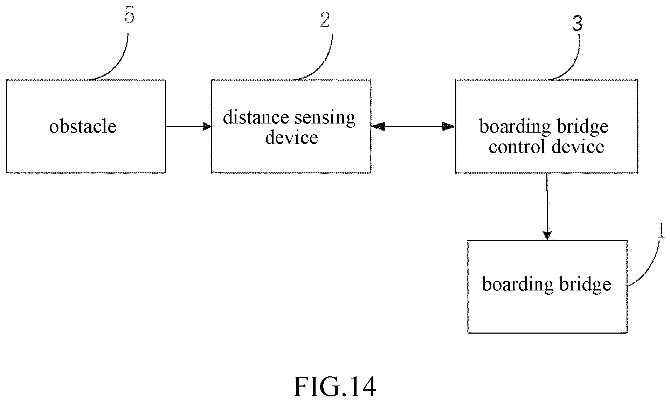

As shown in Fig. 14, the boarding bridge collision avoidance system comprises a boarding bridge 1, a distance sensing device 2, and a boarding bridge control device 3.

As shown in Fig. 2, the boarding bridge 1 comprises a boarding bridge tunnel 11, a round platform 12, and a bridgehead 13 which are connected in sequence. The boarding bridge tunnel 11 is extended and retracted, and a driving unit 14 is provided under the boarding bridge tunnel 11, such that the boarding bridge 1 is pushed by the driving unit 14 to move. Rotating rods 131 are provided under the bridgehead 13. One end of each of the rotating rods 131 is connected to a bottom of the round platform 12, and the other end is connected to the bridgehead 13, so that the bridgehead 13 may rotate around the round platform 12 to realize flexible docking to the aircraft door.

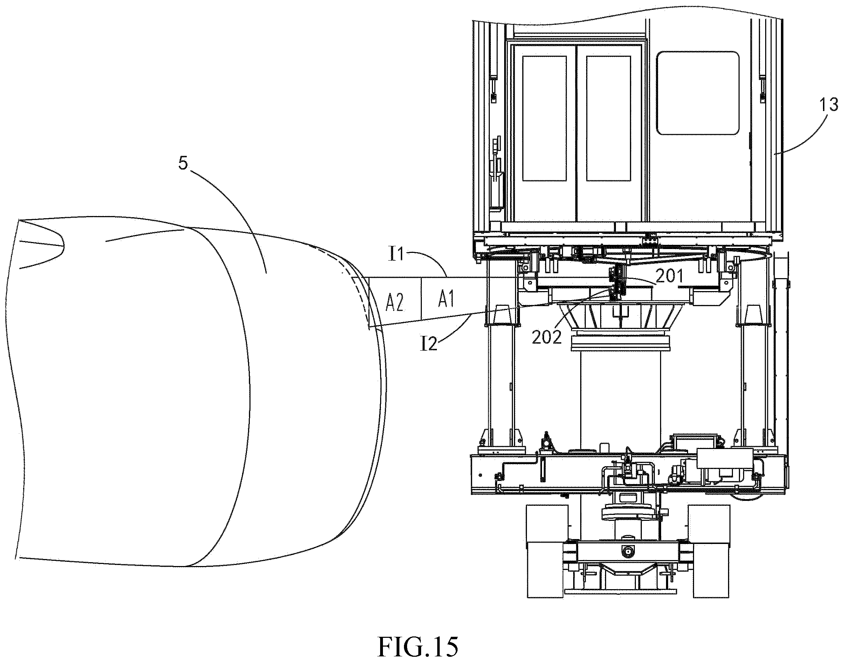

As shown in Figs. 3, 11, 15, and 17, in the boarding bridge collision avoidance system, the distance sensing device 2 is arranged at a bottom of the round platform 12 for acquiring the pre-configured protective regions of the boarding bridge 1, scanning and acquiring the position of the obstacle 5, and producing and sending the alarm signal if the obstacle 5 is determined within a protective region, and continuing scanning if the obstacle is not in any of the protective regions. As shown in Fig. 14, the boarding bridge control device 3 is used to receive the alarm signal and control the boarding bridge to perform a collision avoidance action.

As shown in Fig. 16, the boarding bridge collision avoidance system may also include a rotation angle measuring sensor 4 arranged in the bridgehead 13 and electrically connected to the boarding bridge control device 3, so as to collect the rotation angle range of the bridgehead 13 and the rotation angle of the bridgehead 13, and sending them to the boarding bridge control device 3.

Continuing to refer to Fig. 16, the distance sensing device 2 comprises a distance sensor 20, a protective region allocation module 21, and a coordinate system establishment module 22. The distance sensor 20 is used to scan and acquire the position of the obstacle 5. The protective region allocation module 21 is used to equally divide the rotation angle range into N partitions, where n is a positive integer and N≥1. Moreover, when the bridgehead 13 is rotated to the middle position of each partition, the protective region allocation module 21 is used to draw the protective region of each partition according to the outline of the boarding bridge 1, so as to obtain the pre-configured protective regions of the boarding bridge. The coordinate system establishment module 22 is used to take the emitting point of the scanning line emitted by the distance sensor 20 as the origin, and take the symmetric center line of the range scanned by the scanning line as the Y-axis, so as to establish a rectangular coordinate system in the scan plane of the scanning line, and acquire the coordinate values of each point of the protective regions.

In addition, the distance sensing device 2 further comprises a controller 23. The controller 23 is respectively electrically connected to the distance sensor 20 and the boarding bridge control device 3. When the rotation angle measuring sensor 4 collects the rotation angle of the bridgehead 13, for example, when the rotation angle β is within the range of (E+(m-1)*α, E+m*α], the corresponding protective region is Bm, the boarding bridge control device 3 sends the switching signal of the protective region Bm to the controller 23 according to the corresponding logical relationship in the Table 1 stored therein. The controller 23 switches to the protective region Bm after receiving the switching signal, and controls the distance sensor 20 to scan and acquire the coordinates of the obstacle 5 in the rectangular coordinate system corresponding to the protective region Bm. Thus when the bridgehead 13 of the boarding bridge 1 rotates, the protective regions changes following, so as to achieve a more comprehensive collision avoidance protection.

The boarding bridge control device 3 further comprises a collision avoidance control module 31 for controlling the boarding bridge 1 to perform a collision avoidance action. For example, when the distance sensor 20 scans the obstacle 5, it sends the obstacle's position information to the controller 23. Upon received the coordinates of the obstacle 5 in the corresponding protective region, the controller 23 determines whether the coordinates fall into the first graded zone A1 of the protective region, if the coordinates fall into the first graded zone A1, then a first alarm signal is produced and sent to the collision avoidance control module 31 in the boarding bridge control device 3, and in turn, the collision avoidance control module 31 controls the boarding bridge to stop. If the coordinates of the obstacle 5 is determined as falling in the second graded zone A2, then a second alarm signal is produced and sent to the collision avoidance control module 31, and in turn, the collision avoidance control module 31 controls the boarding bridge to slow down.

As shown in Figs. 3 and 11, the bridgehead 13 comprises rotating rods 131 which are located below the round platform 12 and connected to the round platform 12 and the bridgehead 13. As shown in Fig. 3, the distance sensing device 2 is arranged on the rotating rods 131 to rotate with the bridgehead 13. As shown in Fig. 11, the distance sensing device 2 is arranged on the round platform 12. At this time, the distance sensing device 2 would not rotate as the bridgehead 13 rotates. If the distance sensing device 2 is arranged at a different position, the reference frame of the rectangular coordinate system established by it will be different. Since the establishment of different rectangular coordinate systems and the acquisition of the coordinate values of the protective region have been described in detail in the method embodiment, and the system embodiment is also based on the same inventive concept, the relevant contents of the method embodiment is introduced into the system embodiment and will not be repeated redundantly.

In the collision avoidance system in the foregoing embodiment, one, two or three distance sensing devices 2 can be provided.

If two distance sensing devices 2 are provided, they are divided into a first distance sensing device and a second distance sensing device. Among them, the first distance sensing device may include a first distance sensor 201. The first distance sensing device is installed on the rotating rod 31 or the round platform 12. A first scan plane I1 formed by all the scanning lines emitted by the first distance sensor 201 is a horizontal plane. That is, the protective region acquired by the first distance sensor 201 is located in the horizontal plane.

However, since the edge portion of the aircraft wing is usually a circular arc surface, if scanning is set to be performed only on a horizontal plane, the obstacle 5 not in the scan plane may not be scanned, so there is still a collision risk.

Therefore, the second distance sensing device is further provided by the disclosure. The second distance sensing device is located below or above the first distance sensing device, and the second distance sensing device comprises the second distance sensor 202. If the second distance sensing device is installed below the first distance sensing device, the second distance sensor 202 is arranged below the first distance sensor 201, and the second scan plane I2 emitted by the second distance sensor 202 is inclined downward with respect to the first scan plane I1; or alternatively, if the second distance sensing device is installed above the first distance sensing device, the second distance sensor 202 is located above the first distance sensor 201, and the second scan plane I2 emitted by the second distance sensor 202 is inclined upward with respect to the first scan plane. That is, there is an included angle between the first scan plane I1 and the second scan plane I2. The included angle is in a range of 0°-30°. Of course, the included angle may have other value, and those skilled in the art may make a selection for this according to the actual situation of the aircraft, so there is no special limitation here.

Of course, the boarding bridge collision avoidance system may further include a third distance sensing device which includes a third distance sensor (not shown). On the basis of the above-mentioned embodiment, the first distance sensor 201 is also arranged as above. The second distance sensor 202 is arranged below the first distance sensor 201, and a second scan plane I2 emitted by the second distance sensor 202 is inclined downward with respect to the first scan plane I1. That is, there is an included angle between the second scan plane I2 and the first scan plane I1, and the included angle is in a range of 0°-30°. The third distance sensor is arranged above the first distance sensor 201, and the third scan plane (not shown) emitted by the third distance sensor is inclined upward with respect to the first scan plane I1. That is, there is an included angle between the third scan plane and the first scan plane I1, and the included angle is in a range of 0°-30°. Of course, the range of the included angle is not limited to this. Therefore, the three distance sensors may scan the obstacle 5 more comprehensively.

The distance sensing device 2 in the above embodiment is a laser scanner, and its scan plane may have a central angle of 250°-360°, and specifically, the central angle can be 270°, 280°, 300°, or 320°. Therefore, a wide range of detection can be realized, and by setting a rectangular coordinate system in the distance sensing device 2, the distance sensing device 2 can be self-adaptive to the detection region, that is, the rectangular coordinate system and the coordinates of the associated protective region are retrieved according to the rotation angle of the bridgehead 13, so that the operation is more accurate and simple.

Furthermore, as described in the above embodiment, by the arrangement of three distance sensing devices 2, the three distance sensing devices 2 have different rectangular coordinate systems, and the positions of the three distance sensing devices are different so their protective regions will also be different. As long as one of the distance sensing devices 2 senses that an obstacle 5 falls into a first graded zone A1, the boarding bridge can be controlled to stop by the boarding bridge control device. Such situation comprises: if at least one distance sensing device 2 senses that an obstacle 5 is located in the first graded zone A1 of its protective region, and other distance sensing devices 2 simultaneously detect that the obstacle 5 is located in the second graded zones A2 of their protective regions, the obstacle 5 is determined preferably located in a first graded zone A1, then the boarding bridge control device 3 controls the boarding bridge 1 to stop. Of course, if all the three distance sensing devices 2 sense that the obstacle 5 is located in a first graded zone A1, then the obstacle 5 is determined to be located in the first graded zone A1.

If none of the three distance sensing devices 2 detects that the obstacle 5 is located in a first graded zone A1 of their protective regions, but located in a second graded zone A2, or if at least one distance sensing device 2 detects that the obstacle 5 is located in the second graded zone A2 of its protective region, and other distance sensing devices 2 sense that the obstacle 5 is not located in their protective regions, the obstacle 5 is determined preferably located in a second graded zone A2, then the boarding bridge control device 3 controls the boarding bridge 1 to slow down. In other words, once upon the obstacle 5 is sensed to appear in a first graded zone A1, then the obstacle 5 is determined preferably located in a first graded zone A1, and the boarding bridge control device 3 controls the boarding bridge 1 to stop; if the obstacle 5 does not appear in a first graded zone A1, once upon it appears in a second graded zone A2, then the obstacle 5 is determined preferably located in a second graded zone A2, and the boarding bridge control device 3 controls the boarding bridge 1 to slow down.

Furthermore, as shown in Fig. 2, the boarding bridge collision avoidance system of the disclosure may further include at least one protective sensing device 6 arranged on the boarding bridge 1. The protective sensing device 6 comprises a protective sensor 601. The scanning line emitted by the protective sensor 601 is oriented toward an obstacle 5, and the scan region of the scanning line is a three-dimensional cone, i.e., the protective sensor 601 can scan in a three-dimensional space. Furthermore, the other components of the protective sensing device 6 are the same as the above distance sensing device 2, that is, the protective sensing device 6 also comprises a protective region allocation module, a coordinate system establishment module, and a controller, etc. The protective sensing device 6 can acquire a pre-configured protective region, and acquire a coordinate system corresponding to the protective region, furthermore, the protective sensing device 6 can perform signal transmission through the controller and the boarding bridge control device, etc., which will not be redundantly repeated here.

Furthermore, when the protective sensing device 6 and the distance sensing device 2 both sense an obstacle 5, the determination about the graded zones is the same as the above three distance sensing devices 2, that is, when a protective sensing device 6 and a distance sensing device 2 sense the obstacle 5, a graded zone is determined. Once upon the obstacle 5 appearing in a first graded zone A1, the first graded zone A1 is preferably determined, and the boarding bridge control device 3 controls the boarding bridge 1 to stop. If the obstacle 5 does not appear in the first graded zone A1, as long as it appears in a second graded zone A2, then the second graded zone A2 is preferably determined, and the boarding bridge control device 3 controls the boarding bridge 1 to slow down.

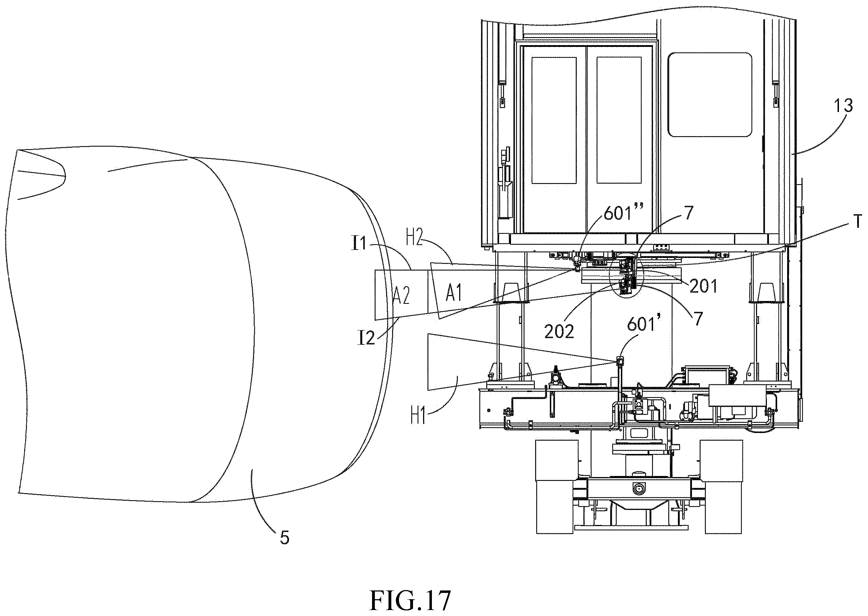

Specifically, as shown in Fig. 17, the protective sensor 601 is an electromagnetic wave sensor 601' and/or an ultrasonic sensor 601". In an embodiment, as shown in Figs. 2 and 17, the electromagnetic wave sensor 601' is arranged in front of the driving unit 14 of the boarding bridge 1, and the ultrasonic sensor 601" is arranged at a bottom of the bridgehead 13. Moreover, the detecting faces (scan planes) of the electromagnetic wave sensor 601' and the ultrasonic sensor 601" both face a direction of the obstacle 5 (i.e., the aircraft wing or engine or adjacent the boarding bridge). When the electromagnetic wave sensor 601' and/or the ultrasonic sensor 601" detects an obstacle 5, the protective sensing device 6 will send a signal of the obstacle 5 to the boarding bridge control device 3, and the collision avoidance control module 31 of the boarding bridge control device 3 is activated and sends a stop instruction to the boarding bridge 1 to stop the boarding bridge 1, so as to achieve the purpose of collision avoidance.

As shown in Fig. 17, since the scan region of the protective sensor 601 is a cone in a three-dimensional space, the first scan region H1 of the electromagnetic wave sensor 601' and the first scan plane I1 of the first distance sensor 201 forms a three-dimensional detection, and the second scan region H2 of the ultrasonic sensor 601" and the second scan plane I2 of the second distance sensor 202 also forms a three-dimensional detection. Therefore, the protective region of the electromagnetic wave sensor 601', the protective region of the ultrasonic sensor 601", the protective region of the first distance sensor 201 and the protective region of the second distance sensor 202 form a three-dimensional detection in a three-dimensional space. That is, in order to realize the detection in cooperation with the above-mentioned distance sensing device 2, as long as one of the sensors senses an obstacle, the sensing device containing the sensor can control the boarding bridge to stop or decelerate through the boarding bridge control device, so the obstacle 5 can be detected more accurately. During the process that the boarding bridge 1 is approaching the door of the aircraft or is withdrawing, when any one of the electromagnetic wave sensor 601', the ultrasonic sensor 601", the first distance sensor 201, the second distance sensor 202, and the third distance sensor detects that the obstacle 5 falls into a protective region, collision avoidance function will be activated, thereby greatly improving the reliability of the collision avoidance function of the boarding bridge 1.

Furthermore, redundant protections may also be formed among the various sensors, that is, even if a certain sensor fails, the collision avoidance system of the boarding bridge 1 can still perform the collision avoidance function.

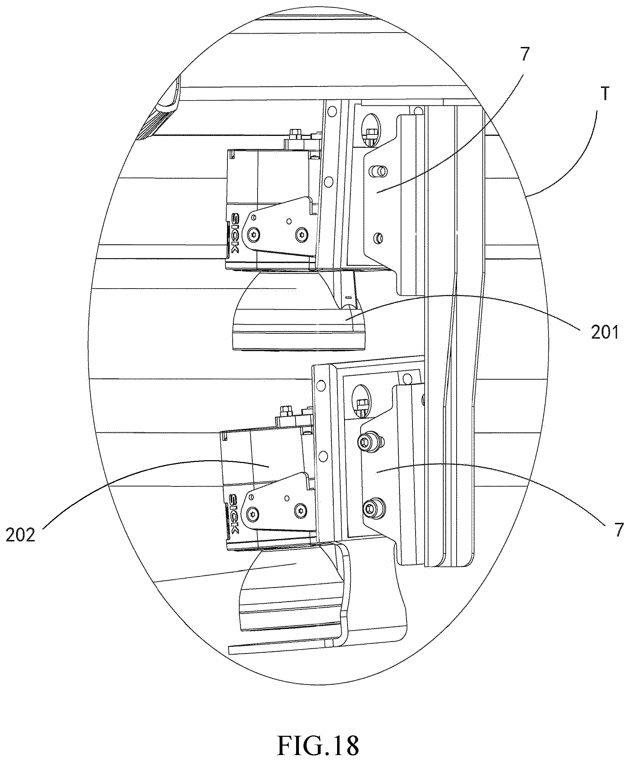

In an embodiment, as shown in Fig. 18, each of the distance sensing device and/or the protective sensing device can be arranged on the round platform 12 or the rotating rods 131 through a support 7. The support 7 can perform a rotational adjustment in three directions of X-axis, Y-axis, and Z-axis, so that every sensing device can be adjusted in X-axis, Y-axis, and Z-axis directions. The support 7 can play a role in fine-tuning the distance sensing device to overcome problems caused by manufacturing accuracy or installation tolerances. Before scanning, the distance sensing device would be adjusted through the support 7, and then the distance sensing device will be positioned, and the subsequent scanning will be performed.

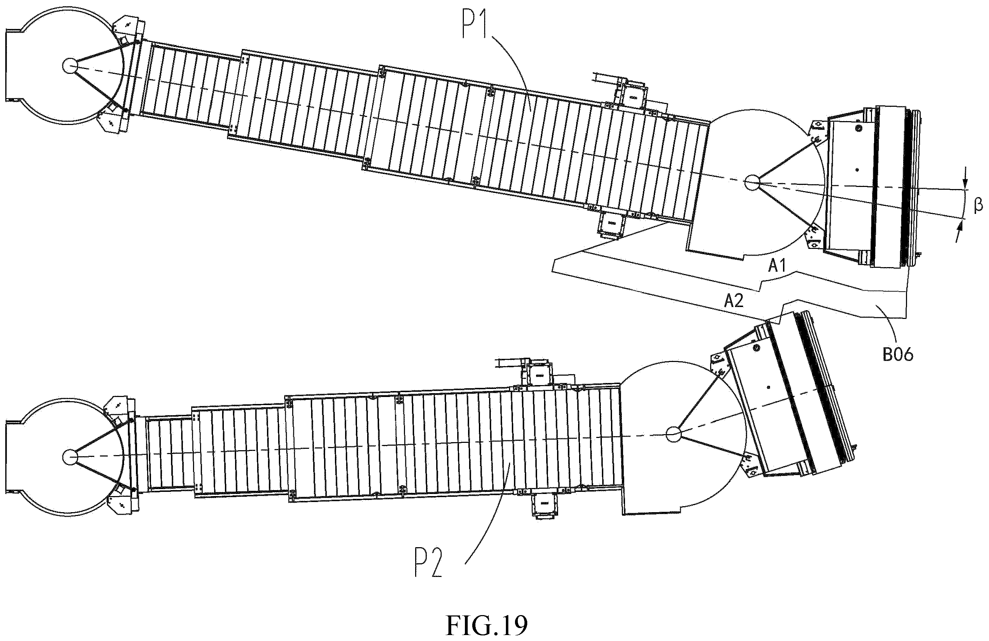

The boarding bridge collision avoidance system of the disclosure can not only be used for collision avoidance between the boarding bridge 1 and the aircraft, but also can be used for collision avoidance between the boarding bridge P1 and the boarding bridge P2, and between the boarding bridge 1 and surrounding obstacles 5. As shown in Fig. 19, which shows a schematic view about collision avoidance between two boarding bridges P1 and P2. During the movement of the boarding bridges P1 and P2, when the distance sensor 20 of the boarding bridge P1 senses there is an obstacle 5 in the collision avoidance partition Bm, it will transmit the sensed warning signal or protection signal to the moving boarding bridge P1 or P2, and the moving boarding bridge P1 or P2 is decelerated or stopped according to the type of the sensed signal received, so as to realize collision avoidance between the boarding bridge and the adjacent boarding bridge.

In summary, the boarding bridge collision avoidance system of the disclosure can achieve more accurate collision avoidance with easier operations.

### Reference Sing List:

1, P1, P2: boarding bridge;
11: boarding bridge tunnel;
12: round platform;
13: bridgehead;
131: rotating rod;
14: driving unit;
2: distance sensing device;
20: distance sensor;
21: protective region allocation module;
22: coordinate system establishment module;
201: first distance sensor;
202: second distance sensor;
23: controller;
3: boarding bridge control device;
31: collision avoidance control module;
4: rotation angle measuring sensor;
5: obstacle;
6: protective sensing device;
601: protective sensor;
601': electromagnetic wave sensor;
601": ultrasonic sensor;
7: support;
K: central axis of the bridgehead;
F: boarding bridge extending direction;
L, M: minimum distance;
Q01-Qn: partitions;
B01-Bn: protective regions;
A1: first graded zone;
S1: edge line of the first graded zone;
S11: first end point;
S13: second end point;
A2: second graded zone;
S2: edge line of the second graded zone;
S21: third end point;
S22: fourth end point;
C: front end point;
R: boundary point;
I1: first scan plane;
I2: second scan plane;
H1: fourth scan plane;
H2: fifth scan plane.

## Claims

1. A boarding bridge collision avoidance method, comprising:
acquiring (S200) a pre-configured protective region of a boarding bridge (1, P1, P2);
scanning and acquiring (S400) a position of an obstacle (5); and
if (S600) the obstacle (5) is located in the protective region, producing an alarm signal, and controlling the boarding bridge (1, P1, P2) to perform a collision avoidance action; and if the obstacle (5) is not located in the protective region, continually scanning the position of the obstacle (5),
**characterised in that**
the boarding bridge collision avoidance method further comprises:
collecting a rotation angle range of a bridgehead (13) of the boarding bridge (1, P1, P2), and equally dividing the rotation angle range be into n partitions (Q01-Qn), where n is a positive integer and n≥1;
when the bridgehead (13) is rotated to a middle position of each of the partitions (Q01-Qn), drawing a protective region of each of the partitions (Q01-Qn) according to an outline of the boarding bridge (1, P1, P2) to obtain the pre-configured boarding bridge protective region.

2. The boarding bridge collision avoidance method according to claim 1, wherein taking an extending direction of the boarding bridge (1, P1, P2) as 0° reference, the method further comprises determining the rotation angle range of the bridgehead (13) of the boarding bridge (1, P1, P2) to be [E, F], and equally dividing the rotation angle range be into 16 partitions (Q01-Qn), wherein -30° ≤ E < F ≤ 90°.

3. The boarding bridge collision avoidance method according to claim 1, wherein the protective region comprises a first graded zone (A1), an edge line of the first graded zone (S1) has a minimum distance (L, M) from the outline of a side of the boarding bridge (1, P1, P2) close to the obstacle (5); or
the protective region comprises a plurality of graded zones, and the minimum distances (L, M) between the edge lines of the plurality of graded areas and the outline of the side of the boarding bridge (1, P1, P2) close to the obstacle (5) are gradually increased, and
wherein the plurality of graded zones include a first graded zone (A1) and a second graded zone (A2), wherein an edge line of the first graded zone (S1) has a first minimum distance from the outline of the boarding bridge (1, P1, P2) on the side close to the obstacle (5); an edge line of the second graded zone (S2) has a second minimum distance from the outline of the boarding bridge (1, P1, P2) on the side close to the obstacle (5); and the second minimum distance is greater than the first minimum distance; and
wherein the method further comprises
producing a first alarm signal and controlling the boarding bridge (1, P1, P2) to stop when the obstacle (5) is located in the first graded zone; and producing a second alarm signal and controlling the boarding bridge (1, P1, P2) to slow down when the obstacle (5) is located in the second graded zone (A2).

4. The boarding bridge collision avoidance method according to claim 3, wherein the edge line of each of the protective regions (B01-Bn) has a first end point (S11) and a second end point (S13), the first end point (S11) is determined according to a position of a driving unit (14) of the boarding bridge (1, P1, P2), and the second end point (S13) is facing to a front end point (C) of a front end on the side of the bridgehead (13) close to the obstacle (5);
an emitting point of a scanning line for scanning and acquiring the position of the obstacle (5) is connected to the first end point (S11) to form a first side edge line, the emitting point of the scanning line is sequentially connected to the front end point (C) and the second end point (S13) to form a second side edge line, and the first side edge line, the edge line and the second side edge line form the closed protective region.

5. The boarding bridge collision avoidance method according to claim 4, wherein the emitting point of the scanning line is taken as an origin, and a symmetric center line of a range scanned by the scanning line is taken as a Y-axis, a rectangular coordinate system is established in a scan plane of the scanning line, and coordinate values of each point of the protective region are acquired.

6. The boarding bridge collision avoidance method according to claim 5, wherein the rectangular coordinate system takes the bridgehead (13) of the boarding bridge (1, P1, P2) as a reference frame, and when the bridgehead (13) is rotated to a middle position of one of the partitions (Q01-Qn), coordinate values of each point of the protective region corresponding to the one partition are acquired, or
the rectangular coordinate system takes the ground as a reference frame, and when the bridgehead (13) is rotated to a middle position of one of the partitions (Q01-Qn), coordinate values of each point of the protective region corresponding to the one partition are acquired.

7. The boarding bridge collision avoidance method according to claim 5, wherein the range scanned by the scanning line has a shape of a fan, and a central angle of the fan is 250°-360°.

8. The boarding bridge collision avoidance method according to claim 5, further comprising:
establishing a corresponding logical relationship between the rotation angle of the bridgehead (13) and the protective region, and the corresponding logical relationship is: when the rotation angle is at (E+(m-1)*α,E+m*α], the protective region is Bm; where 1 ≤ m ≤ n, and m is a positive integer; and
sending a switching signal for switching to the protective region Bm when the collected rotation angle β of the bridgehead (13) is within the range of (E+(m-1)*α, E+m*α].

9. A boarding bridge collision avoidance system, comprising a boarding bridge (1, P1, P2), wherein the boarding bridge (1, P1, P2) comprises a boarding bridge tunnel (11), a round platform (12), and a bridgehead (13) which are connected in sequence, and the bridgehead (13) is rotatable with respect to the round platform (12), and the boarding bridge collision avoidance system further comprises:
a distance sensing device (2) arranged at a bottom of the round platform (12) and configured to acquire a pre-configured protective region of the boarding bridge (1, P1, P2), scan and acquire a position of an obstacle (5), when the obstacle (5) is in the protective region, the distance sensing device (2) is configured to produce and send an alarm signal, and when the obstacle (5) is not in the protective regions (B01-Bn), the distance sensing device (2) is configured to continue scanning the position of the obstacle (5);
a boarding bridge control device (3) configured to receive the alarm signal and control the boarding bridge (1, P1, P2) to perform a collision avoidance action,
wherein the boarding bridge collision avoidance system further comprises:
a rotation angle measuring sensor (4) arranged in the bridgehead (13), electrically connected to the boarding bridge control device (3), and configured to collect a rotation angle range of the bridgehead (13) and a rotation angle of the bridgehead (13), and send the rotation angle range of the bridgehead (13) and the rotation angle of the bridgehead (13) to the boarding bridge control device (3),
and wherein the distance sensing device (2) further comprises:
a distance sensor configured to scan and acquire the position of the obstacle (5);
a protective region allocation module (21) configured to equally divide the rotation angle range into n partitions (Q01-Qn), where N is a positive integer and N≥ 1, and draw the protective region of each partition according to an outline of the boarding bridge (1, P1, P2) when the bridgehead (13) is rotated to a middle position of each of the partitions (Q01-Qn), so as to obtain the pre-configured protective region of the boarding bridge (1, P1, P2); and
a coordinate system establishment module (22) configured to take an emitting point of a scanning line emitted by the distance sensor as an origin, and take a symmetric center line of a range scanned by the scanning line as a Y-axis, so as to establish a rectangular coordinate system in a scan plane of the scanning line, and acquire coordinate values of each point of the protective region.

10. The boarding bridge collision avoidance system according to claim 9, wherein:
the boarding bridge control device (3) is configured to store a corresponding logical relationship between the rotation angle of the bridgehead (13) and the protective region, and the corresponding logical relationship is: when the rotation angle is at (E+(m-1)*α, E+m*α], the protective region is Bm; where 1 ≤ m ≤ n, and m is a positive integer; and
the distance sensing device (2) further comprises:
a controller (23) electrically connected to the distance sensor and the boarding bridge control device (3) respectively, and when the rotation angle of the bridgehead (13) collected by the rotation angle measuring sensor (4) is within the range of (E+(m-1)*α, E+m*α], the boarding bridge control device (3) is configured to send a switching signal of the protective region Bm to the controller (23) according to the corresponding logical relationship, the controller (23) is configured to switch to the protective region Bm after receiving the switching signal, is configured to control the distance sensor to scan and acquire coordinates of the obstacle (5) in the rectangular coordinate system corresponding to the protective region Bm, is configured to determine whether the coordinates are in the protective region, and if the coordinates are in the protective region, is configured to produce the alarm signal.

11. The boarding bridge collision avoidance system according to claim 10, wherein the boarding bridge control device further comprises a collision avoidance control module (31) for controlling the boarding bridge (1, P1, P2) and configured to perform the collision avoidance action.

12. The boarding bridge collision avoidance system according to claim 9, wherein:
the bridgehead (13) comprises a rotating rod (131) which is located below the round platform (12) and connected to the round platform (12) and the bridgehead (13);
the distance sensing device (2) is arranged on the rotating rod (131) to rotate with the bridgehead (13); or
the distance sensing device (2) is arranged on the round platform (12).

13. The boarding bridge collision avoidance system according to claim 9, wherein the boarding bridge collision avoidance system comprises two distance sensing devices (2) which are respectively:
a first distance sensing device including a first distance sensor (201), all first scanning lines emitted by the first distance sensor (201) form a first scan plane (I1), and the first scan plane (I1) is a horizontal plane; and
a second distance sensing device located below the first distance sensing device, the second distance sensing device comprises a second distance sensor (202), all second scanning lines emitted by the second distance sensor (202) form a second scan plane (I2), and the second scan plane (I2) is inclined downward with respect to the first scan plane (I1), or
the boarding bridge collision avoidance system further comprises:
a third distance sensing device located above the first distance sensing device, the third distance sensing device comprises a third distance sensor, a third scanning line emitted by the third distance sensor forms a third scan plane, and the third scan plane is inclined upward with respect to the first scan plane (I1), or
the boarding bridge collision avoidance system further comprises:
at least one protective sensing device (6) including a protective sensor (601) which is arranged in the boarding bridge (1, P1, P2), all scanning lines emitted by the protective sensor (601) are oriented toward the obstacle (5), and a scan region of the scanning lines is a three-dimensional cone.

## Patentansprüche

1. Verfahren zur Kollisionsvermeidung bei Fluggastbrücken, umfassend:
Erfassen (S200) einer vorkonfigurierten schützenden Region einer Fluggastbrücke (1, P1 P2);
Abtasten und Erfassen (S400) einer Position eines Hindernisses (5); und
wenn (S600) sich das Hindernis (5) in der schützenden Region befindet, Erzeugen eines Alarmsignals und Steuern der Fluggastbrücke (1, P1, P2), um eine Kollisionsvermeidungsaktion durchzuführen; und wenn sich das Hindernis (5) nicht in der schützenden Region befindet, kontinuierliches Abtasten der Position des Hindernisses (5),
**dadurch gekennzeichnet, dass** das Verfahren zur Kollisionsvermeidung bei Fluggastbrücken ferner Folgendes umfasst:
Sammeln eines Drehwinkelbereichs eines Brückenkopfes (13) der Fluggastbrücke (1, P1, P2), und gleichmäßiges Aufteilen des Drehwinkelbereichs in n Partitionen (Q01-Qn), wobei n eine positive ganze Zahl ist und n ≥ 1;
wenn der Brückenkopf (13) in eine mittlere Position jeder der Trennwände (Q01- Qn) gedreht wird, Zeichnen einer schützenden Region jeder der Trennwände (Q01-Qn) nach einem Umriss der Fluggastbrücke (1, P1, P2), um die vorkonfigurierte schützende Region der Fluggastbrücke zu erhalten.

2. Verfahren zur Kollisionsvermeidung von Fluggastbrücken nach Anspruch 1, wobei das Verfahren ferner das Bestimmen des Drehwinkelbereichs des Brückenkopfs (13) der Fluggastbrücke (1, P1, P2) als [E, F] umfasst, wobei der Drehwinkelbereich gleichmäßig in 16 Teilbereiche (Q01-Qn) unterteilt wird, wobei -30° ≤ E < F ≤ 90° ist, wobei eine Ausfahrrichtung der Fluggastbrücke (1, P1, P2) als 0°-Referenz genommen wird.

3. Verfahren zur Kollisionsvermeidung bei Fluggastbrücken nach Anspruch 1, wobei die schützende Region eine erste abgestufte Zone (A1) umfasst, wobei eine Randlinie der ersten abgestuften Zone (S1) einen Mindestabstand (L, M) von der Kontur einer Seite der Fluggastbrücke (1, P1, P2) nahe dem Hindernis (5) aufweist; oder
die schützende Region eine Vielzahl von abgestuften Bereichen umfasst und die Mindestabstände (L, M) zwischen den Kantenlinien der Vielzahl von abgestuften Bereichen und dem Umriss der dem Hindernis (5) nahen Seite der Fluggastbrücke (1, P1, P2) schrittweise vergrößert werden, und
wobei die Vielzahl der abgestuften Zonen eine erste abgestufte Zone (Al) und eine zweite abgestufte Zone (A2) aufweist, wobei eine Kantenlinie der ersten abgestuften Zone (S1) einen ersten Mindestabstand von der Kontur der Fluggastbrücke (1, P1, P2) auf der dem Hindernis (5) zugewandten Seite aufweist; eine Kantenlinie der zweiten abgestuften Zone (S2) einen zweiten Mindestabstand vom Umriss der Fluggastbrücke (1, P1, P2) auf der dem Hindernis (5) zugewandten Seite aufweist; und der zweite Mindestabstand größer ist als der erste Mindestabstand; und
wobei das Verfahren ferner Folgendes umfasst
Erzeugen eines ersten Alarmsignals und Steuern der Fluggastbrücke (1, P1, P2) zum Anhalten, wenn sich das Hindernis (5) in der ersten abgestuften Zone befindet; und Erzeugen eines zweiten Alarmsignals und Steuern der Fluggastbrücke (1, P1, P2) zum Abbremsen, wenn sich das Hindernis (5) in der zweiten abgestuften Zone (A2) befindet.

4. Verfahren zur Kollisionsvermeidung bei Fluggastbrücken nach Anspruch 3, wobei die Kantenlinie jeder der schützenden Regionen (B01-Bn) einen ersten Endpunkt (S11) und einen zweiten Endpunkt (S13) aufweist, der erste Endpunkt (S11) entsprechend einer Position einer Antriebseinheit (14) der Fluggastbrücke (1, P1, P2) bestimmt wird und der zweite Endpunkt (S13) einem vorderen Endpunkt (C) eines vorderen Endes auf der Seite des Brückenkopfes (13) nahe dem Hindernis (5) zugewandt ist;
ein emittierender Punkt einer Abtastlinie zum Abtasten und Erfassen der Position des Hindernisses (5) mit dem ersten Endpunkt (S11) verbunden ist, um eine erste Seitenkantenlinie zu bilden, der emittierende Punkt der Abtastlinie nacheinander mit dem vorderen Endpunkt (C) und dem zweiten Endpunkt (S13) verbunden ist, um eine zweite Seitenkantenlinie zu bilden, und die erste Seitenkantenlinie, die Kantenlinie und die zweite Seitenkantenlinie die geschlossene schützende Region bilden.

5. Verfahren zur Kollisionsvermeidung bei Fluggastbrücken nach Anspruch 4, wobei der emittierende Punkt der Abtastlinie als Ursprung und eine symmetrische Mittellinie eines von der Abtastlinie abgetasteten Bereichs als Y-Achse genommen wird, ein rechtwinkliges Koordinatensystem in einer Abtastebene der Abtastlinie eingerichtet wird und Koordinatenwerte für jeden Punkt der schützenden Region erfasst werden.

6. Verfahren zur Kollisionsvermeidung bei Fluggastbrücken nach Anspruch 5, wobei das rechtwinklige Koordinatensystem den Brückenkopf (13) der Fluggastbrücke (1, P1, P2) als Referenzrahmen verwendet und bei Drehung des Brückenkopfes (13) in eine mittlere Position einer der Trennwände (Q01-Qn) die Koordinatenwerte jedes Punktes der schützenden Region entsprechend der einen Trennwand erfasst werden, oder
das rechtwinklige Koordinatensystem die Erdung als Referenzrahmen nimmt, und wenn der Brückenkopf (13) in eine mittlere Position einer der Trennwände (Q01-Qn) gedreht wird, werden die Koordinatenwerte jedes Punktes der schützenden Region, die der einen Trennwand entspricht, erfasst.

7. Verfahren zur Kollisionsvermeidung bei Fluggastbrücken nach Anspruch 5, wobei der von der Abtastlinie abgetastete Bereich die Form eines Fächers aufweist und ein Zentralwinkel des Lüfters 250°-360° beträgt.

8. Verfahren zur Kollisionsvermeidung bei Fluggastbrücken nach Anspruch 5, ferner umfassend:
Herstellen einer entsprechenden logischen Beziehung zwischen dem Drehwinkel des Brückenkopfes (13) und der schützenden Region, und die entsprechende logische Beziehung ist: wenn der Drehwinkel bei (E+(m-l)*α, E+m*α] liegt, ist die schützende Region Bm; wobei 1 ≤ m ≤ n, und m eine positive ganze Zahl ist; und
Senden eines Schaltsignals zum Umschalten auf die schützende Region Bm, wenn der gesammelte Drehwinkel β des Brückenkopfes (13) im Bereich von (E+(m-1)*α, E+m*α] liegt.

9. System zur Kollisionsvermeidung bei Fluggastbrücken, umfassend eine Fluggastbrücke (1, P1, P2), wobei die Fluggastbrücke (1, P1, P2) einen Fluggastbrückentunnel (11), eine runde Plattform (12) und einen Brückenkopf (13) umfasst, die in Sequenz verbunden sind, und der Brückenkopf (13) in Bezug auf die runde Plattform (12) drehbar ist, und das System zur Kollisionsvermeidung bei Fluggastbrücken ferner Folgendes umfasst:
eine Abstandserfassungsvorrichtung (2), die an einem Boden der runden Plattform (12) angeordnet und konfiguriert ist, um eine vorkonfigurierte schützende Region der Fluggastbrücke (1, P1, P2) zu erfassen, eine Position eines Hindernisses (5) abzutasten und zu erfassen, wenn sich das Hindernis (5) in der schützenden Region befindet, die Abstandserfassungsvorrichtung (2) konfiguriert ist, um ein Alarmsignal zu erzeugen und zu senden, und wenn sich das Hindernis (5) nicht in den schützenden Regionen (B01-Bn) befindet, die Abstandserfassungsvorrichtung (2) konfiguriert ist, um die Abtastung der Position des Hindernisses (5) fortzusetzen;
eine Vorrichtung zur Fluggastbrückensteuerung (3), die konfiguriert ist, um das Alarmsignal zu empfangen und die Fluggastbrücke (1, P1, P2) zu steuern, um eine Kollisionsvermeidungsaktion durchzuführen,
wobei das System zur Kollisionsvermeidung bei Fluggastbrücken ferner Folgendes umfasst:
einen Drehwinkelmesssensor (4), der im Brückenkopf (13) angeordnet ist, elektrisch mit der Vorrichtung zur Bordbrückensteuerung (3) verbunden ist und konfiguriert ist, einen Drehwinkelbereich des Brückenkopfes (13) und einen Drehwinkel des Brückenkopfes (13) zu sammeln und den Drehwinkelbereich des Brückenkopfes (13) und den Drehwinkel des Brückenkopfes (13) an die Vorrichtung zur Bordbrückensteuerung (3) zu senden,
und wobei die Abstandserfassungsvorrichtung (2) ferner Folgendes umfasst:
einen Abstandssensor, der konfiguriert ist, um die Position des Hindernisses (5) abzutasten und zu erfassen; ein Schutzbereichszuordnungsmodul (21), das konfiguriert ist, um den Drehwinkelbereich gleichmäßig in n Partitionen (Q01-Qn) zu unterteilen, wobei N eine positive ganze Zahl und N ≥ 1 ist, und den Schutzbereich jeder Partition nach einer Kontur der Fluggastbrücke (1, P1, P2) zu zeichnen, wenn der Brückenkopf (13) in eine mittlere Position jeder der Partitionen (Q01-Qn) gedreht wird, um den vorkonfigurierten Schutzbereich der Fluggastbrücke (1, P1, P2) zu erhalten; und
ein Koordinatensystem-Erstellungsmodul (22), das konfiguriert ist, um einen emittierenden Punkt einer Abtastlinie, die von dem Abstandssensor emittiert wird, als einen Ursprung zu nehmen und eine symmetrische Mittellinie eines Bereichs, der von der Abtastlinie abgetastet wird, als eine Y-Achse zu nehmen, um so ein rechtwinkliges Koordinatensystem in einer Abtastebene der Abtastlinie zu erstellen und Koordinatenwerte von jedem Punkt der schützenden Region zu erfassen.

10. System zur Kollisionsvermeidung bei Fluggastbrücken nach Anspruch 9, wobei:
die Vorrichtung zur Fluggastbrückensteuerung (3) konfiguriert ist, um eine entsprechende logische Beziehung zwischen dem Drehwinkel des Brückenkopfes (13) und der schützenden Region zu speichern, und die entsprechende logische Beziehung ist: wenn der Drehwinkel bei (E+(m-l)*α, E+m*α] liegt, ist die schützende Region Bm; wobei 1 ≤ m ≤ n, und m eine positive ganze Zahl ist; und
die Abstandserfassungsvorrichtung (2) ferner Folgendes umfasst:
eine Steuerung (23), die elektrisch mit dem Abstandssensor bzw. der Vorrichtung zur Fluggastbrückensteuerung (3) verbunden ist, und wenn der vom Drehwinkelmesssensor (4) gemessene Drehwinkel β des Brückenkopfes (13) im Bereich von (E+(m-1)*α, E+m*α] liegt, ist die Vorrichtung zur Fluggastbrückensteuerung (3) konfiguriert, um ein Schaltsignal der schützenden Region Bm an die Steuerung (23) nach der entsprechenden logischen Beziehung zu senden, wobei die Steuerung (23) konfiguriert ist, um nach dem Empfangen des Schaltsignals auf die schützende Region Bm zu schalten,
konfiguriert ist, um den Abstandssensor zu steuern, um Koordinaten des Hindernisses (5) in dem rechtwinkligen Koordinatensystem, das der schützenden Region Bm entspricht, abzutasten und zu erfassen, konfiguriert ist, um zu bestimmen, ob die Koordinaten in der schützenden Region liegen, und wenn die Koordinaten in der schützenden Region liegen, konfiguriert ist, um das Alarmsignal zu erzeugen.

11. System zur Kollisionsvermeidung bei Fluggastbrücken nach Anspruch 10, wobei die Vorrichtung zur Fluggastbrückensteuerung ferner ein Steuermodul (31) zur Kollisionsvermeidung umfasst, das die Fluggastbrücke (1, P1, P2) steuert und konfiguriert ist, um die Kollisionsvermeidung durchzuführen.

12. System zur Kollisionsvermeidung bei Fluggastbrücken nach Anspruch 9, wobei:
der Brückenkopf (13) eine Drehstange (131) umfasst, die sich unterhalb der runden Plattform (12) befindet und mit der runden Plattform (12) und dem Brückenkopf (13) verbunden ist;
die Abstandserfassungsvorrichtung (2) an der Drehstange (131) angeordnet ist, um sich mit dem Brückenkopf (13) zu drehen; oder
die Abstandserfassungsvorrichtung (2) auf der runden Plattform (12) angeordnet ist.

13. System zur Kollisionsvermeidung bei Fluggastbrücken nach Anspruch 9, wobei das System zur Kollisionsvermeidung bei Fluggastbrücken zwei Abstandserfassungsvorrichtungen (2) umfasst, die jeweils:
eine erste Abstandserfassungsvorrichtung, die einen ersten Abstandssensor (201) einschließt, wobei alle von dem ersten Abstandssensor (201) emittierten ersten Abtastzeilen eine erste Abtastebene (I1) bilden, und die erste Abtastebene (I1) eine horizontale Ebene ist; und
eine zweite Abstandsabtastvorrichtung, die sich unterhalb der ersten Abstandsabtastvorrichtung befindet, wobei die zweite Abstandsabtastvorrichtung einen zweiten Abstandssensor (202) umfasst, alle vom zweiten Abstandssensor (202) emittierten zweiten Abtastzeilen eine zweite Abtastebene (I2) bilden und die zweite Abtastebene (I2) in Bezug auf die erste Abtastebene (I1) nach unten geneigt ist, oder
das System zur Kollisionsvermeidung bei Fluggastbrücken ferner Folgendes umfasst:
eine dritte Abstandserfassungsvorrichtung, die sich oberhalb der ersten Abstandserfassungsvorrichtung befindet, wobei die dritte Abstandserfassungsvorrichtung einen dritten Abstandssensor umfasst, eine dritte Abtastlinie, die von dem dritten Abstandssensor emittiert wird, eine dritte Abtastebene bildet, und die dritte Abtastebene in Bezug auf die erste Abtastebene (I1) nach oben geneigt ist, oder
das System zur Kollisionsvermeidung bei Fluggastbrücken ferner Folgendes umfasst:
mindestens eine schützende Abtastvorrichtung (6), die einen schützenden Sensor (601) einschließt, der in der Fluggastbrücke (1, P1, P2) angeordnet ist, wobei alle von dem schützenden Sensor (601) emittierten Abtastlinien auf das Hindernis (5) ausgerichtet sind und eine Abtastregion der Abtastlinien ein dreidimensionaler Kegel ist.

## Revendications

1. Procédé d'évitement des collisions sur les passerelles d'embarquement, comprenant :
l'acquisition (S200) d'une région de protection préconfigurée d'une passerelle d'embarquement (1, P1 P2) ;
le balayage et l'acquisition (S400) de la position d'un obstacle (5) ; et
si (S600) l'obstacle (5) est situé dans la région de protection, la production d'un signal d'alarme, et la commande de la passerelle d'embarquement (1, P1, P2) pour effectuer une manœuvre d'évitement de collision ; et si l'obstacle (5) n'est pas situé dans la région de protection, le balayage continuel de la position de l'obstacle (5),
**caractérisé en ce que** le procédé d'évitement des collisions sur la passerelle d'embarquement comprend en outre :
la collecte d'une plage d'angle de rotation d'une tête de passerelle (13) de la passerelle d'embarquement (1, P1, P2), et la division de manière égale de la plage d'angle de rotation en n partitions (Q01-Qn), où n est un entier positif et n ≥ 1 ;
lorsque la tête de passerelle (13) est tournée vers une position médiane de chacune des partitions (Q01-Qn), le dessin d'une région de protection de chacune des partitions (Q01-Qn) selon un contour de la passerelle d'embarquement (1, P1, P2) pour obtenir la région de protection de passerelle d'embarquement préconfigurée.

2. Procédé d'évitement des collisions sur les passerelles d'embarquement selon la revendication 1, dans lequel, prenant une direction d'extension de la passerelle d'embarquement (1, P1, P2) comme référence 0°, le procédé comprend en outre la détermination de la plage d'angle de rotation de la tête de passerelle (13) de la passerelle d'embarquement (1, P1, P2) comme étant [E, F], et la division égale de la plage d'angle de rotation en 16 partitions (Q01-Qn), dans lequel -30° ≤ E < F ≤ 90°.

3. Procédé d'évitement des collisions sur les passerelles d'embarquement selon la revendication 1, dans lequel la région de protection comprend une première zone graduée (A1), une ligne de bord de la première zone graduée (S1) a une distance minimale (L, M) du contour d'un côté de la passerelle d'embarquement (1, P1, P2) proche de l'obstacle (5) ; ou
la région de protection comprend une pluralité de zones graduées, et les distances minimales (L, M) entre les lignes de bord de la pluralité de zones graduées et le contour du côté de la passerelle d'embarquement (1, P1, P2) proche de l'obstacle (5) sont progressivement augmentées, et
dans lequel la pluralité de zones graduées comporte une première zone graduée (A1) et une seconde zone graduée (A2), dans lequel une ligne de bord de la première zone graduée (S1) a une première distance minimale par rapport au contour de la passerelle d'embarquement (1, P1, P2) du côté le plus proche de l'obstacle (5) ; une ligne de bord de la seconde zone graduée (S2) a une seconde distance minimale par rapport au contour de la passerelle d'embarquement (1, P1, P2) du côté le plus proche de l'obstacle (5) ; et la seconde distance minimale est supérieure à la première distance minimale ; et
dans lequel le procédé comprend en outre la production d'un premier signal d'alarme et la commande de l'arrêt de la passerelle d'embarquement (1, P1, P2) lorsque l'obstacle (5) est situé dans la première zone graduée ; et la production d'un second signal d'alarme et la commande du ralentissement de la passerelle d'embarquement (1, P1, P2) lorsque l'obstacle (5) est situé dans la seconde zone graduée (A2).

4. Procédé d'évitement des collisions sur les passerelles d'embarquement selon la revendication 3, dans lequel la ligne de bord de chacune des régions de protection (B01-Bn) a un premier point d'extrémité (S11) et un second point d'extrémité (S13), le premier point d'extrémité (S11) est déterminé en fonction d'une position d'une unité d'entraînement (14) de la passerelle d'embarquement (1, P1, P2), et le second point d'extrémité (S13) est orienté vers un point d'extrémité avant (C) d'une extrémité avant du côté de la tête de passerelle (13) proche de l'obstacle (5) ;
un point d'émission d'une ligne de balayage pour balayer et acquérir la position de l'obstacle (5) est connecté au premier point d'extrémité (S11) pour former une première ligne de bord latéral, le point d'émission de la ligne de balayage est connecté séquentiellement au point d'extrémité avant (C) et au second point d'extrémité (S13) pour former une seconde ligne de bord latéral, et la première ligne de bord latéral, la ligne de bord et la seconde ligne de bord latéral forment la région de protection fermée.

5. Procédé d'évitement des collisions sur les passerelles d'embarquement selon la revendication 4, dans lequel le point d'émission de la ligne de balayage est pris comme origine, et une ligne centrale symétrique d'une plage balayée par la ligne de balayage est prise comme axe Y, un système de coordonnées rectangulaires est établi dans un plan de balayage de la ligne de balayage, et les valeurs de coordonnées de chaque point de la région de protection sont acquises.

6. Procédé d'évitement des collisions sur les passerelles d'embarquement selon la revendication 5, dans lequel le système de coordonnées rectangulaires prend la tête de passerelle (13) de la passerelle d'embarquement (1, P1, P2) comme repère, et lorsque la tête de passerelle (13) est tournée vers une position médiane de l'une des partitions (Q01-Qn), les valeurs de coordonnées de chaque point de la région de protection correspondant à l'une partition sont acquises, ou
le système de coordonnées rectangulaires prend le sol comme repère, et lorsque la tête de passerelle (13) est tournée vers une position médiane de l'une des partitions (Q01-Qn), les valeurs de coordonnées de chaque point de la région de protection correspondant à l'une partition sont acquises.

7. Procédé d'évitement des collisions sur les passerelles d'embarquement selon la revendication 5, dans lequel la plage balayée par la ligne de balayage a une forme d'un éventail, et un angle central de l'éventail est de 250° à 360°.

8. Procédé d'évitement des collisions sur les passerelles d'embarquement selon la revendication 5, comprenant en outre :
l'établissement d'une relation logique correspondante entre l'angle de rotation de la tête de passerelle (13) et la région de protection, et la relation logique correspondante est la suivante : lorsque l'angle de rotation est à (E+(m-1)*α, E+m*α], la région de protection est Bm ; où 1 ≤ m ≤ n, et m est un entier positif ; et
l'envoi d'un signal de commutation pour commuter vers la région de protection Bm lorsque l'angle de rotation collecté β de la tête de passerelle (13) se trouve dans la plage de (E+(m-1)*α, E+m*α].

9. Système d'évitement des collisions sur les passerelles d'embarquement, comprenant une passerelle d'embarquement (1, P1, P2), dans lequel la passerelle d'embarquement (1, P1, P2) comprend un tunnel de passerelle d'embarquement (11), une plateforme circulaire (12) et une tête de passerelle (13) qui sont connectés en séquence, et la tête de passerelle (13) est rotative par rapport à la plateforme circulaire (12), et le système d'évitement des collisions sur les passerelles d'embarquement comprend en outre :
un dispositif de détection de distance (2) disposé au bas de la plateforme ronde (12) et configuré pour acquérir une région de protection préconfigurée de la passerelle d'embarquement (1, P1, P2), balayer et acquérir la position d'un obstacle (5), lorsque l'obstacle (5) se trouve dans la région de protection, le dispositif de détection de distance (2) est configuré pour produire et envoyer un signal d'alarme, et lorsque l'obstacle (5) ne se trouve pas dans les régions de protection (B01-Bn), le dispositif de détection de distance (2) est configuré pour continuer à balayer la position de l'obstacle (5) ; un dispositif de commande de passerelle d'embarquement (3) configuré pour recevoir le signal d'alarme et commander la passerelle d'embarquement (1, P1, P2) afin d'effectuer une action d'évitement de collision,
dans lequel le système d'évitement des collisions sur les passerelles d'embarquement comprend en outre :
un capteur de mesure d'angle de rotation (4) disposé dans la tête de passerelle (13), connecté électriquement au dispositif de commande de passerelle d'embarquement (3), et configuré pour collecter une plage d'angle de rotation de la tête de passerelle (13) et un angle de rotation de la tête de passerelle (13), et envoyer la plage d'angle de rotation de la tête de passerelle (13) et l'angle de rotation de la tête de passerelle (13) au dispositif de commande de passerelle d'embarquement (3),
et dans lequel le dispositif de détection de distance (2) comprend en outre :
un capteur de distance configuré pour balayer et acquérir la position de l'obstacle (5) ;
un module d'allocation de région de protection (21) configuré pour diviser équitablement la plage d'angles de rotation en n partitions (Q01-Qn), où N est un entier positif et N ≥ 1, et dessiner la région de protection de chaque partition selon un contour de la passerelle d'embarquement (1, P1, P2) lorsque la tête de passerelle (13) est tournée vers une position médiane de chacune des partitions (Q01-Qn), afin d'obtenir la région de protection préconfigurée de la passerelle d'embarquement (1, P1, P2) ; et
un module d'établissement de système de coordonnées (22) configuré pour prendre comme origine un point d'émission d'une ligne de balayage émise par le capteur de distance, et prendre comme axe Y une ligne centrale symétrique d'une plage balayée par la ligne de balayage, afin d'établir un système de coordonnées rectangulaires dans un plan de balayage de la ligne de balayage, et d'acquérir les valeurs de coordonnées de chaque point de la région de protection.

10. Système d'évitement des collisions sur les passerelles d'embarquement selon la revendication 9, dans lequel :
le dispositif de commande de passerelle d'embarquement (3) est configuré pour stocker une relation logique correspondante entre l'angle de rotation de la tête de passerelle (13) et la région de protection, et la relation logique correspondante est la suivante : lorsque l'angle de rotation est à (E+(m-l)*α, E+m*α], la région de protection est Bm ; où 1 ≤ m ≤ n, et m est un entier positif ; et
le dispositif de détection de distance (2) comprend en outre :
un dispositif de commande (23) connecté électriquement au capteur de distance et au dispositif de commande de passerelle d'embarquement (3) respectivement, et lorsque l'angle de rotation β de la tête de passerelle (13) recueilli par le capteur de mesure d'angle de rotation (4) est dans la plage (E+(m-l)*α, E+m*α], le dispositif de commande de passerelle d'embarquement (3) est configuré pour envoyer un signal de commutation de la région de protection Bm au dispositif de commande (23) selon la relation logique correspondante, le dispositif de commande (23) est configuré pour basculer vers la région de protection Bm après réception du signal de commutation,
est configuré pour commander le capteur de distance afin de balayer et d'acquérir les coordonnées de l'obstacle (5) dans le système de coordonnées rectangulaires correspondant à la région de protection Bm, est configuré pour déterminer si les coordonnées se trouvent dans la région de protection, et si les coordonnées se trouvent dans la région de protection, est configuré pour produire le signal d'alarme.

11. Système d'évitement des collisions sur les passerelles d'embarquement selon la revendication 10, dans lequel le dispositif de commande de passerelle d'embarquement comprend en outre un module de commande d'évitement de collision (31) pour commander la passerelle d'embarquement (1, P1, P2) et configuré pour effectuer l'action d'évitement de collision.

12. Système d'évitement des collisions sur les passerelles d'embarquement selon la revendication 9, dans lequel :
la tête de passerelle (13) comprend une tige rotative (131) qui est située sous la plateforme ronde (12) et reliée à la plateforme ronde (12) et à la tête de passerelle (13) ;
le dispositif de détection de distance (2) est disposé sur la tige rotative (131) pour tourner avec la tête de passerelle (13) ; ou
le dispositif de détection de distance (2) est disposé sur la plateforme ronde (12).

13. Système d'évitement des collisions sur les passerelles d'embarquement selon la revendication 9, comprenant deux dispositifs de détection de distance (2) qui sont respectivement :
un premier dispositif de détection de distance comportant un premier capteur de distance (201), toutes les premières lignes de balayage émises par le premier capteur de distance (201) forment un premier plan de balayage (I1), et le premier plan de balayage (I1) est un plan horizontal ; et
un deuxième dispositif de détection de distance situé sous le premier dispositif de détection de distance, le deuxième dispositif de détection de distance comprend un deuxième capteur de distance (202), toutes les deuxièmes lignes de balayage émises par le deuxième capteur de distance (202) forment un deuxième plan de balayage (I2), et le deuxième plan de balayage (I2) est incliné vers le bas par rapport au premier plan de balayage (I1), ou
le système d'évitement des collisions sur les passerelles d'embarquement comprend en outre :
un troisième dispositif de détection de distance situé au-dessus du premier dispositif de détection de distance, le troisième dispositif de détection de distance comprend un troisième capteur de distance, une troisième ligne de balayage émise par le troisième capteur de distance forme un troisième plan de balayage, et le troisième plan de balayage est incliné vers le haut par rapport au premier plan de balayage (I1), ou
le système d'évitement des collisions sur les passerelles d'embarquement comprend en outre :
au moins un dispositif de détection de protection (6) comportant un capteur de protection (601) qui est disposé dans la passerelle d'embarquement (1, P1, P2), toutes les lignes de balayage émises par le capteur de protection (601) sont orientées vers l'obstacle (5), et une région de balayage des lignes de balayage est un cône tridimensionnel.
